# EUROPEAN PATENT SPECIFICATION

(11) **EP 4 451 743 B1**
(45) Date of publication and mention of the grant of the patent: **05.08.2026**
(21) Application number: 22918868.5
(22) Date of filing: 26.12.2022
(51) Int. Cl.: H04W 40/22, H04W 16/26, H04W 72/0457, H04L 45/02, H04W 76/20, H04W 84/04, H04W 92/24, H04L 45/74, H04W 40/24

(54) **COMMUNICATION CONTROL METHOD**
KOMMUNIKATIONSSTEUERUNGSVERFAHREN
PROCÉDÉ DE COMMANDE DE COMMUNICATION

(30) Priority: 04.01.2022 US 202263296232 P
(43) Date of publication of application: 23.10.2024
(73) Proprietor: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2022/047872
(87) International publication number: WO 2023/132284

(56) References cited:
- WO-A1-2021/206011
- CANON RESEARCH CENTRE FRANCE: "Rel-17 BAP Operations", vol. RAN WG2, no. E-meeting; 20211101 - 20211112, 21 October 2021 (2021-10-21), XP052066785, Retrieved from the Internet <URL:https://ftp.3gpp.org/tsg_ran/WG2_RL2/TSGR2_116-e/Docs/R2-2110343.zip R2-2110343 Rel-17 BAP Operations.docx> [retrieved on 20211021]
- QUALCOMM INCORPORATED: "Inter-donor topology transport", vol. RAN WG3, no. E-meeting; 20211101 - 20211111, 21 October 2021 (2021-10-21), XP052067951, Retrieved from the Internet <URL:https://ftp.3gpp.org/tsg_ran/WG3_Iu/TSGR3_114-e/Docs/R3-214955.zip R3-214955 Inter-donor topology transport.docx> [retrieved on 20211021]
- FUTUREWEI: "Analysis of some remaining issues for inter-donor & inter-topology routing", 3GPP DRAFT; R2-2111203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20211101 - 20211112, 22 October 2021 (2021-10-22), Mobile Competence Centre ; 650, route des Lucioles ; F-06921 Sophia-Antipolis Cedex ; France, XP052067637
- QUALCOMM INCORPORATED: "Status Report to TSG 1 Work plan related evaluation", 3GPP DRAFT; RP-212810, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20211206 - 20211217, 2 December 2021 (2021-12-02), Mobile Competence Centre ; 650, route des Lucioles ; F-06921 Sophia-Antipolis Cedex ; France, XP052086070
- KYOCERA: "BAP open issues on BAP#01, BAP#03 and BAP#04", 3GPP DRAFT; R2-2202908, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20220221 - 20220303, 14 February 2022 (2022-02-14), Mobile Competence Centre ; 650, route des Lucioles ; F-06921 Sophia-Antipolis Cedex ; France, XP052110757

## Description

### TECHNICAL FIELD

The present disclosure relates to a communication control method, a boundary relay node, a cellular communication system, a chipset for a boundary relay node and a computer program.

### BACKGROUND

In the Third Generation Partnership Project (3GPP), which is a project for the standardization of cellular communication systems, introducing a new relay node referred to as an Integrated Access and Backhaul (IAB) node (for example, see "3GPP TS 38.300 V16.7.0 (2021-09)") is being considered. One or more relay nodes are involved in communication between a base station and a user equipment and perform relay for the communication.

Canon Research Centre France, "Rel-17 BAP Operations", 3GPP TSG-RAN WG2 Meeting #116-e, e-meeting, Nov. 1 - Nov. 12, 2021, R2-2110343, XP052066785, discloses a proposal for a description of BAP operations to support the various cases considered for Release 17 (i.e., inter-topology routing, inter-topology re-routing, intra-topology inter-donor-DU re-routing), taking into account RAN2/RAN3 related agreements.

Qualcomm Incorporated, "Inter-donor topology transport", 3GPP TSG-RAN WG3 Meeting #114-e, e-meeting, November 1 - 11, 2021, R3-214955, XP052067951, discusses the granularity of QoS information to be passed between CUs for descendant node traffic and the signaling exchanges for the configuration of BAP header rewriting, BH RLC CH mapping and routing at the boundary node.

### SUMMARY

The present invention provides a communication control method according to claim 1, a boundary relay node according to claim 2, a cellular communication system according to claim 3, a chipset according to claim 4, and a computer program according to claim 5.

### BRIEF DESCRIPTION OF THE DRAWINGS

FIG. 1 is a diagram illustrating a configuration example of a cellular communication system according to an embodiment.
FIG. 2 is a diagram illustrating a relationship between an IAB node, parent nodes, and child nodes.
FIG. 3 is a diagram illustrating a configuration example of a gNB (base station) according to an embodiment.
FIG. 4 is a diagram illustrating a configuration example of an IAB node (relay node) according to an embodiment.
FIG. 5 is a diagram illustrating a configuration example of a UE (user equipment) according to an embodiment.
FIG. 6 is a diagram illustrating an example of a protocol stack related to an RRC connection and a NAS connection of an IAB-MT.
FIG. 7 is a diagram illustrating an example of a protocol stack related to an F1-U protocol.
FIG. 8 is a diagram illustrating an example of a protocol stack related to an F1-C protocol.
FIG. 9 is a diagram illustrating an inter-node configuration example according to a first embodiment.
FIG. 10 is a flowchart illustrating an operation example of an option D1 according to the first embodiment.
FIG. 11 is a flowchart illustrating an operation example of an option D2 according to the first embodiment.
FIG. 12 is a flowchart illustrating an operation example of an option U1 according to the first embodiment.
FIG. 13 is a flowchart illustrating an operation example of an option U2 according to the first embodiment.
FIG. 14 is a flowchart illustrating an operation example of an option C2 according to the first embodiment.
FIG. 15 is a diagram illustrating an example of a boundary IAB node according to a second embodiment.
FIG. 16 is a flowchart illustrating an operation example according to the second embodiment.
FIG. 17 is a diagram illustrating a configuration example of a boundary IAB node according to a third embodiment.
FIG. 18 is a flowchart illustrating a first operation example according to the third embodiment.
FIG. 19 is a flowchart illustrating a second operation example according to the third embodiment.
FIG. 20 is a flowchart illustrating an operation example according to a fourth embodiment.
FIG. 21 is a diagram illustrating an example of a boundary IAB node according to a fifth embodiment.
FIG. 22 is a flowchart illustrating an operation example according to the fifth embodiment.
FIG. 23 is a diagram illustrating a scenario related to routing and re-routing.
FIG. 24 is a diagram illustrating a routing table applicable in an inter-CU scenario.
FIG. 25 is a diagram outlining a routing/re-routing function enhancement for all scenarios.

### DESCRIPTION OF EMBODIMENTS

A cellular communication system in embodiments is described with reference to the drawings. In the description of the drawings, the same or similar parts are denoted by the same or similar reference signs.

### Configuration of Cellular Communication System

A configuration example of the cellular communication system according to an embodiment is described. In an embodiment, a cellular communication system 1 is a 3GPP 5G system. Specifically, a radio access scheme in the cellular communication system 1 is New Radio (NR) being a 5G radio access scheme. Note that Long Term Evolution (LTE) may be at least partially applied to the cellular communication system 1. A future cellular communication system such as 6G may be applied to the cellular communication system 1.

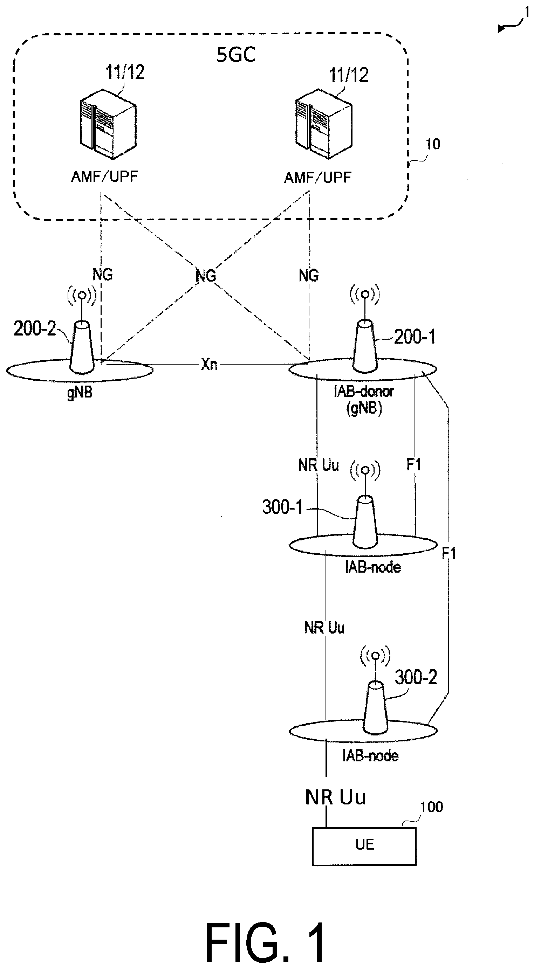

FIG. 1 is a diagram illustrating a configuration example of the cellular communication system 1 according to the embodiment.

As illustrated in FIG. 1, the cellular communication system 1 includes a 5G core network (5GC) 10, a User Equipment (UE) 100, base station apparatuses (hereinafter, also referred to as base stations in some cases) 200-1 and 200-2, and IAB nodes 300-1 and 300-2. The base station 200 may be referred to as a gNB.

An example in which the base station 200 is an NR base station is mainly described below, but the base station 200 may be an LTE base station (i.e., an eNB).

Note that hereinafter, the base stations 200-1 and 200-2 may be referred to as a gNB 200 (or the base station 200 in some cases), and the IAB nodes 300-1 and 300-2 may be referred to as an IAB node 300.

The 5GC 10 includes an Access and Mobility Management Function (AMF) 11 and a User Plane Function (UPF) 12. The AMF 11 is an apparatus that performs various types of mobility controls and the like for the UE 100. The AMF 11 communicates with the UE 100 by using Non-Access Stratum (NAS) signaling, and thereby manages information of an area in which the UE 100 exists. The UPF 12 is an apparatus that performs transfer control of user data and the like.

Each gNB 200 is a fixed wireless communication node and manages one or more cells. The term "cell" is used to indicate a minimum unit of a wireless communication area. The term "cell" may be used to indicate a function or a resource for performing wireless communication with the UE 100. One cell belongs to one carrier frequency. Hereinafter, the cell and the base station may be used without distinction.

Each gNB 200 is interconnected to the 5GC 10 via an interface referred to as an NG interface. FIG. 1 illustrates a gNB 200-1 and a gNB 200-2 that are connected to the 5GC 10.

Each gNB 200 may be divided into a Central Unit (CU) and a Distributed Unit (DU). The CU and the DU are interconnected via an interface referred to as an F1 interface. An F1 protocol is a communication protocol between the CU and the DU and includes an F1-C protocol that is a control plane protocol and an F1-U protocol that is a user plane protocol.

The cellular communication system 1 supports an IAB that uses NR for the backhaul to enable wireless relay of the NR access. The donor gNB 200-1 (or a donor node, which hereinafter may be also referred to as a "donor node") is a donor base station that is a terminal node of the NR backhaul on the network side and includes additional functionality for supporting the IAB. The backhaul can implement multi-hop via a plurality of hops (i.e., a plurality of IAB nodes 300).

FIG. 1 illustrates an example in which the IAB node 300-1 is wirelessly connected to the donor node 200-1, the IAB node 300-2 is wirelessly connected to the IAB node 300-1, and the F1 protocol is transmitted in two backhaul hops.

The UE 100 is a mobile wireless communication apparatus that performs wireless communication with the cells. The UE 100 may be any type of apparatus as long as the UE 100 is an apparatus that performs wireless communication with the gNB 200 or the IAB node 300. For example, the UE 100 includes a mobile phone terminal, a tablet terminal, a laptop PC, a sensor or an apparatus that is provided in a sensor, a vehicle or an apparatus that is provided in a vehicle, and an aircraft or an apparatus provided in an aircraft. The UE 100 is wirelessly connected to the IAB node 300 or the gNB 200 via an access link. FIG. 1 illustrates an example in which the UE 100 is wirelessly connected to the IAB node 300-2. The UE 100 indirectly communicates with the donor node 200-1 via the IAB node 300-2 and the IAB node 300-1.

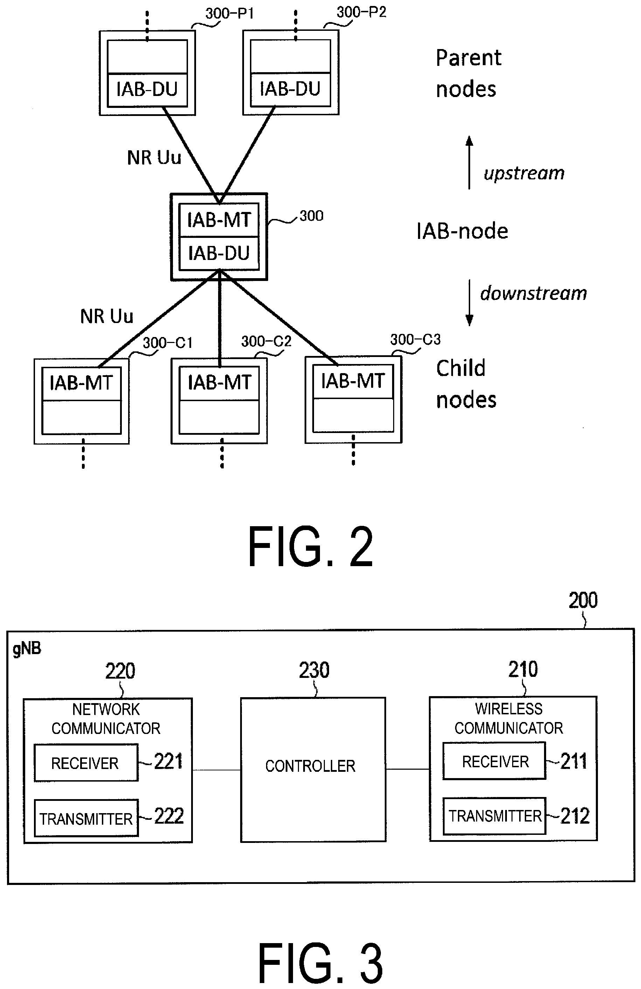

FIG. 2 is a diagram illustrating an example of a relationship between the IAB node 300, parent nodes, and child nodes.

As illustrated in FIG. 2, each IAB node 300 includes an IAB-DU corresponding to a base station functional unit and an IAB-Mobile Termination (IAB-MT) corresponding to a user equipment functional unit.

Neighboring nodes of the IAB-MT (i.e., upper node) of an NR Uu wireless interface are referred to as "parent nodes". The parent node is the DU of a parent IAB node or the donor node 200. A radio link between the IAB-MT and each parent node is referred to as a backhaul link (BH link). FIG. 2 illustrates an example in which the parent nodes of the IAB node 300 are IAB nodes 300-P1 and 300-P2. Note that the direction toward the parent nodes is referred to as upstream. As viewed from the UE 100, the upper nodes of the UE 100 can correspond to the parent nodes.

Neighboring nodes of the IAB-DU (i.e., lower nodes) of an NR access interface are referred to as "child nodes". The IAB-DU manages cells in a manner the same as, and/or similar to the gNB 200. The IAB-DU terminates the NR Uu wireless interface connected to the UE 100 and the lower IAB nodes. The IAB-DU supports the F1 protocol for the CU of the donor node 200-1. FIG. 2 illustrates an example in which the child nodes of the IAB node 300 are IAB nodes 300-C1 to 300-C3; however, the UE 100 may be included in the child nodes of the IAB node 300. Note that the direction toward the child nodes is referred to as downstream.

All of the IAB nodes 300 connected to the donor node 200 via one or more hops form a Directed Acyclic Graph (DAG) topology (which may be referred to as "topology" below) rooted at the donor node 200. In this topology, the neighboring nodes of the IAB-DU in the interface are child nodes, and the neighboring nodes of the IAB-MT in the interface are parent nodes as illustrated in FIG. 2. The donor node 200 performs, for example, centralized management on resources, topology, and routes of the IAB topology. The donor node 200 is a gNB that provides network access to the UE 100 via a network of backhaul links and access links.

### Configuration of Base Station

A configuration of the gNB 200 that is a base station according to the embodiment is described. FIG. 3 is a diagram illustrating a configuration example of the gNB 200. As illustrated in FIG. 3, the gNB 200 includes a wireless communicator 210, a network communicator 220, and a controller 230.

The wireless communicator 210 performs wireless communication with the UE 100 and performs wireless communication with the IAB node 300. The wireless communicator 210 includes a receiver 211 and a transmitter 212. The receiver 211 performs various types of reception under control of the controller 230. The receiver 211 includes an antenna and converts (down-converts) a radio signal received by the antenna into a baseband signal (reception signal) which is then transmitted to the controller 230. The transmitter 212 performs various types of transmission under control of the controller 230. The transmitter 212 includes an antenna and converts (up-converts) the baseband signal (transmission signal) output by the controller 230 into a radio signal which is then transmitted from the antenna.

The network communicator 220 performs wired communication (or wireless communication) with the 5GC 10 and performs wired communication (or wireless communication) with another neighboring gNB 200. The network communicator 220 includes a receiver 221 and a transmitter 222. The receiver 221 performs various types of reception under control of the controller 230. The receiver 221 receives a signal from an external source and outputs the reception signal to the controller 230. The transmitter 222 performs various types of transmission under control of the controller 230. The transmitter 222 transmits the transmission signal output by the controller 230 to an external destination.

The controller 230 performs various types of controls for the gNB 200. The controller 230 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. Note that the controller 230 may perform respective processing operations or respective operations in the gNB 200 in each embodiment to be described below.

### Configuration of Relay Node

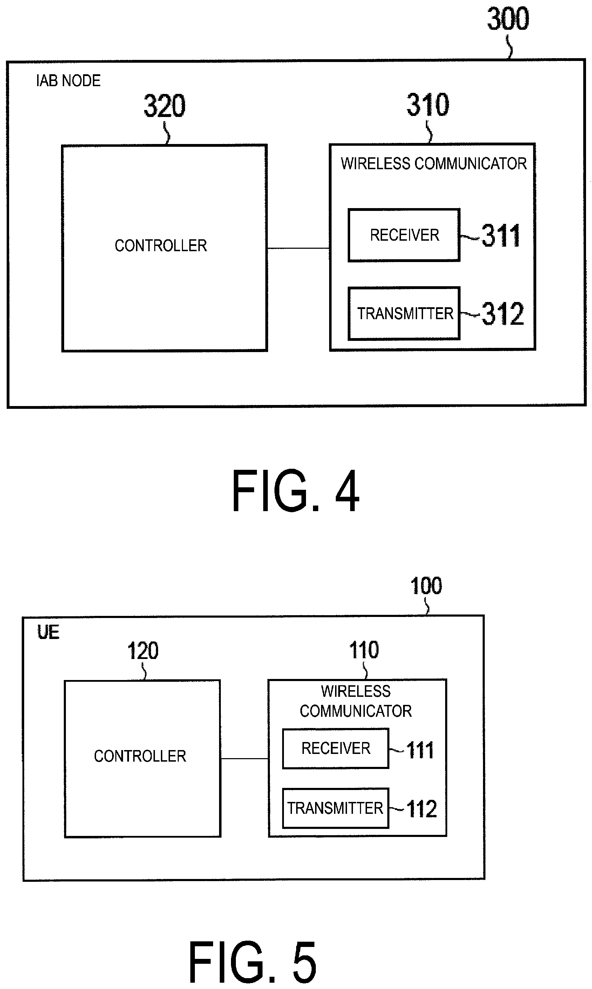

A configuration of the IAB node 300 that is a relay node (or a relay node apparatus. Hereinafter, also referred to as a "relay node") according to the embodiment will be described. FIG. 4 is a diagram illustrating a configuration example of the IAB node 300. As illustrated in FIG. 4, the IAB node 300 includes a wireless communicator 310 and a controller 320. The IAB node 300 may include a plurality of wireless communicators 310.

The wireless communicator 310 performs wireless communication with the gNB 200 (BH link) and wireless communication with the UE 100 (access link). The wireless communicator 310 for the BH link communication and the wireless communicator 310 for the access link communication may be provided separately.

The wireless communicator 310 includes a receiver 311 and a transmitter 312. The receiver 311 performs various types of reception under control of the controller 320. The receiver 311 includes an antenna and converts (down-converts) a radio signal received by the antenna into a baseband signal (reception signal) which is then transmitted to the controller 320. The transmitter 312 performs various types of transmission under control of the controller 320. The transmitter 312 includes an antenna and converts (up-converts) the baseband signal (transmission signal) output by the controller 320 into a radio signal which is then transmitted from the antenna.

The controller 320 performs various types of controls in the IAB node 300. The controller 320 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. Note that the controller 320 may perform respective processing operations or respective operations in the IAB node 300 in each embodiment to be described below.

### Configuration of User Equipment

A configuration of the UE 100 that is a user equipment according to the embodiment is described next. FIG. 5 is a diagram illustrating a configuration example of the UE 100. As illustrated in FIG. 5, the UE 100 includes a wireless communicator 110 and a controller 120.

The wireless communicator 110 performs wireless communication in the access link, i.e., wireless communication with the gNB 200 and wireless communication with the IAB node 300. The wireless communicator 110 may also perform wireless communication in a sidelink, i.e., wireless communication with another UE 100. The wireless communicator 110 includes a receiver 111 and a transmitter 112. The receiver 111 performs various types of reception under control of the controller 120. The receiver 111 includes an antenna and converts (down-converts) a radio signal received by the antenna into a baseband signal (reception signal) which is then transmitted to the controller 120. The transmitter 112 performs various types of transmission under control of the controller 120. The transmitter 112 includes an antenna and converts (up-converts) the baseband signal (transmission signal) output by the controller 120 into a radio signal which is then transmitted from the antenna.

The controller 120 performs various types of control in the UE 100. The controller 120 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. Note that the controller 120 may perform respective processing operations in the UE 100 in each embodiment described below.

### Configuration of Protocol Stack

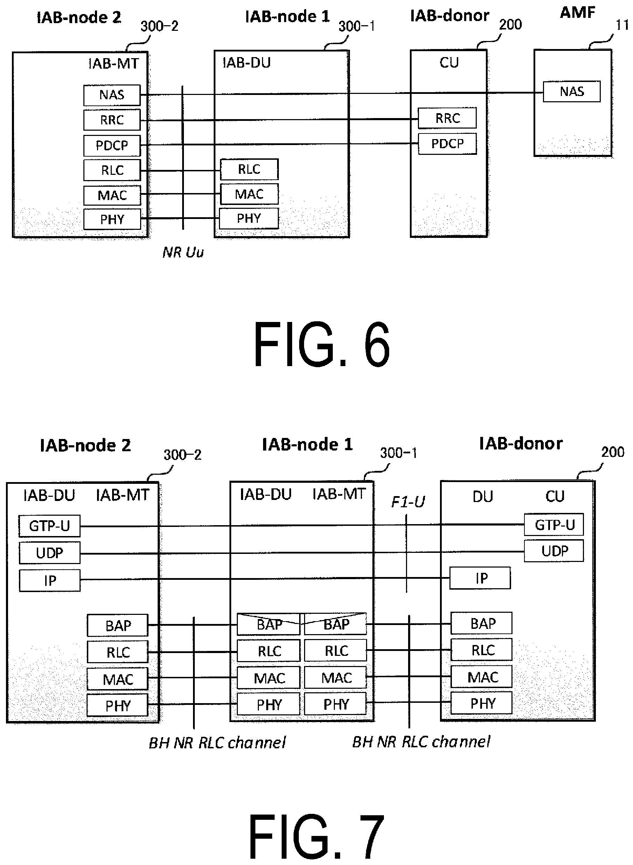

A configuration of a protocol stack according to the embodiment is described next. FIG. 6 is a diagram illustrating an example of a protocol stack related to an RRC connection and a NAS connection of the IAB-MT.

As illustrated in FIG. 6, the IAB-MT of the IAB node 300-2 includes a physical (PHY) layer, a Medium Access Control (MAC) layer, a Radio Link Control (RLC) layer, a Packet Data Convergence Protocol (PDCP) layer, a Radio Resource Control (RRC) layer, and a Non-Access Stratum (NAS) layer.

The PHY layer performs coding and decoding, modulation and demodulation, antenna mapping and demapping, and resource mapping and demapping. Data and control information are transmitted between the PHY layer of the IAB-MT of the IAB node 300-2 and the PHY layer of the IAB-DU of the IAB node 300-1 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the IAB-MT of the IAB node 300-2 and the MAC layer of the IAB-DU of the IAB node 300-1 via a transport channel. The MAC layer of the IAB-DU includes a scheduler. The scheduler determines the uplink and downlink transport formats (transport block sizes, Modulation and Coding Schemes (MCSs)) and resource blocks.

The RLC layer transmits data to the RLC layer on the reception side by using functions of the MAC layer and the PHY layer. Data and control information are transmitted between the RLC layer of the IAB-MT of the IAB node 300-2 and the RLC layer of the IAB-DU of the IAB node 300-1 via a logical channel.

The PDCP layer performs header compression and decompression, and encryption and decryption. Data and control information are transmitted between the PDCP layer of the IAB-MT of the IAB node 300-2 and the PDCP layer of the donor node 200 via a radio bearer.

The RRC layer controls a logical channel, a transport channel, and a physical channel according to establishment, re-establishment, and release of a radio bearer. RRC signaling for various configurations is transmitted between the RRC layer of the IAB-MT of the IAB node 300-2 and the RRC layer of the donor node 200. When an RRC connection to the donor node 200 is present, the IAB-MT is in an RRC connected state. When no RRC connection to the donor node 200 is present, the IAB-MT is in an RRC idle state.

The NAS layer which is positioned upper than the RRC layer performs session management, mobility management, and the like. NAS signaling is transmitted between the NAS layer of the IAB-MT of the IAB node 300-2 and the AMF 11.

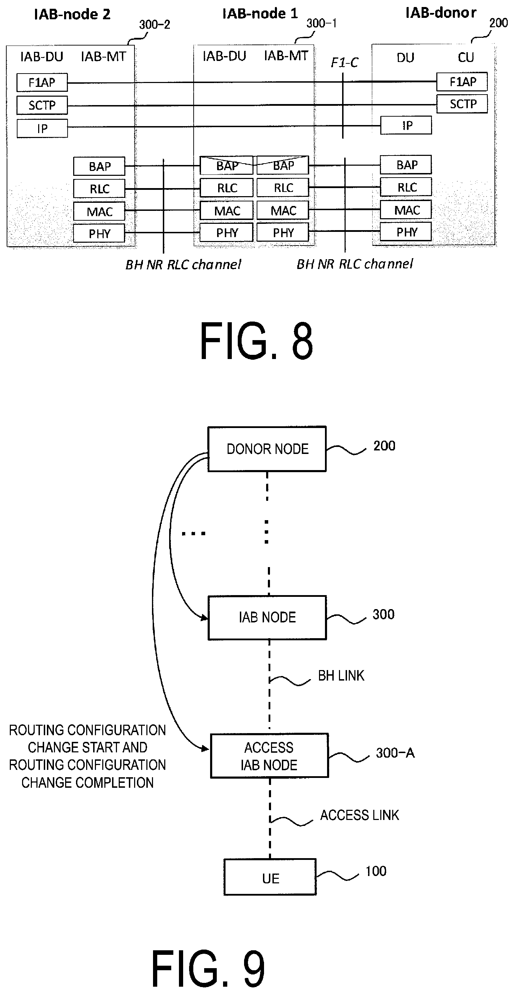

FIG. 7 is a diagram illustrating a protocol stack related to an F1-U protocol. FIG. 8 is a diagram illustrating a protocol stack related to an F1-C protocol. An example is illustrated in which the donor node 200 is divided into a CU and a DU.

As illustrated in FIG. 7, each of the IAB-MT of the IAB node 300-2, the IAB-DU of the IAB node 300-1, the IAB-MT of the IAB node 300-1, and the DU of the donor node 200 includes a Backhaul Adaptation Protocol (BAP) layer as an upper layer of the RLC layer. The BAP layer performs routing processing, and bearer mapping and demapping processing. In the backhaul, the IP layer is transmitted via the BAP layer to allow routing through a plurality of hops.

In each backhaul link, a Protocol Data Unit (PDU) of the BAP layer is transmitted by the backhaul RLC channel (BH NR RLC channel). Configuring a plurality of backhaul RLC channels in each BH link enables the prioritization and Quality of Service (QoS) control of traffic. The association between the BAP PDU and the backhaul RLC channel is executed by the BAP layer of each IAB node 300 and the BAP layer of the donor node 200.

As illustrated in FIG. 8, the protocol stack of the F1-C protocol includes an F1AP layer and an SCTP layer instead of a GTP-U layer and a UDP layer illustrated in FIG. 7.

Note that in the description below, processing or operation performed by the IAB-DU and the IAB-MT of the IAB may be simply described as processing or operation of the "IAB". For example, in the description, transmitting, by the IAB-DU of the IAB node 300-1, a message of the BAP layer to the IAB-MT of the IAB node 300-2 is assumed to correspond to transmitting, by the IAB node 300-1, the message to the IAB node 300-2. Processing or operation of the DU or CU of the donor node 200 may be described simply as processing or operation of the "donor node".

An upstream direction and an uplink (UL) direction may be used without distinction. Furthermore, a downstream direction and a downlink (DL) direction may be used without distinction.

### First Embodiment

A first embodiment is described.

Firstly, routing processing is described in the first embodiment.

### Routing Processing

The routing processing is performed in the BAP layer of the IAB node 300. Specifically, for example, the following processing operation is performed.

In other words, the BAP layer routes a BAP packet, based on a BAP routing ID included in a BAP header. The BAP header is added when the packet arrives from the upper layer and is removed when the packet arrives at a destination node. A configuration of the BAP routing ID or a routing table is configured by the CU of the donor node 200. The BAP routing ID includes a BAP address (or Destination or destination BAP address) and a BAP path ID (or path identifier). The BAP address indicates the destination node. The BAP path ID indicates a routing path which the packet follows to the destination.

Each IAB node 300 on the path of the packet judges whether the packet has arrived at the destination, i.e., whether the BAP address of the IAB node 300 matches the destination. Specifically, the judgment is performed based on the BAP address of the BAP routing ID included in the BAP header. When the packet has not arrived at the destination (destination BAP address) (i.e., the BAP address (Destination) included in the BAP header does not match the BAP address of the IAB node itself), the IAB node 300 determines the BAP address (or backhaul link or egress link) of the next hop, based on the BAP routing ID included in the BAP header and a routing configuration.

As described above, the processing of controlling the destination of the packet may be referred to as routing processing, for example.

Note that hereinafter, the BAP routing ID may be referred to as a routing ID, and the BAP path ID may be referred to as a path ID. An IAB donor DU may be referred to as a DU of the donor node 200, and an IAB donor CU may be referred to as a CU of the donor node 200. Furthermore, the BAP path ID included in the routing ID may be referred to as a path ID, and the BAP address included in the routing ID may be referred to as a Destination.

Communication Control Method According to First Embodiment It is predicted that the larger the topology, the longer time is taken for the donor node 200 to change the routing configuration for all IAB nodes in the topology.

After a packet with a certain routing ID is transmitted from an access IAB node (a node that first processes a packet received from the UE 100 and a node that last processes a packet to be transmitted to the UE 100) or the DU of the donor node 200, when the routing configuration is changed in an intermediate IAB node 300, how the packet is processed may be a problem.

For example, when the routing configuration is changed, the intermediate IAB node 300 may route the packet to a Destination different from a Destination that is to be originally arrived at (in other words, the Destination of the routing ID included in the BAP header of the packet)(in other words, may route the packet to a different route). Such a routing error may cause a packet loss to occur.

To address this, in the first embodiment, the donor node 200 transmits a routing configuration change start message and a routing configuration change completion message to an access IAB node 300-A. The access IAB node 300-A estimates a packet that has already arrived at the donor node 200, based on the two messages, and retransmits a packet transmitted earlier, based on an estimation result.

Specifically, first, a donor node (e.g., the donor node 200) transmits a message about the routing configuration to a relay node (e.g., the IAB node 300) in the topology. Second, the relay node performs first processing in response to receiving the message.

Here, the processing of transmitting the message includes processing in which the donor node transmits the routing configuration change start message to an access relay node (e.g., the access IAB node 300-A) in response to starting a routing configuration change for the relay node in the topology. The processing of transmitting the message also includes processing in which the donor node transmits the routing configuration change completion message to the access relay node in response to completing the routing configuration change for the relay node in the topology. The first processing includes processing in which the access relay node retransmits, based on the routing configuration change start message and the routing configuration change completion message, a packet transmitted in the upstream direction a certain period of time earlier.

FIG. 9 is a diagram illustrating an inter-node configuration example according to the first embodiment. As illustrated in FIG. 9, the donor node 200 transmits the routing configuration change start message and the routing configuration change completion message to the access IAB node 300-A.

This allows the access IAB node 300-A to, for example, recognize a start timing of the routing configuration change and a completion timing of the routing configuration change, and estimate a packet that has already arrived at the donor node 200 (or a packet that has not arrived at the donor node 200) with high accuracy. Therefore, the access IAB node 300-A can compensate for or suppress the packet loss by retransmitting a packet presumed to have encountered packet loss.

### First Operation Example according to First Embodiment

In the first embodiment, a first operation example is described.

The first operation example is described separately for the downstream direction and the upstream direction. In the first operation example, there are two options (option D1 and option D2) for the downstream direction. In the first operation example, there are also two options (option U1 and option U2) for the upstream direction.

### Option D1 for Downstream Direction

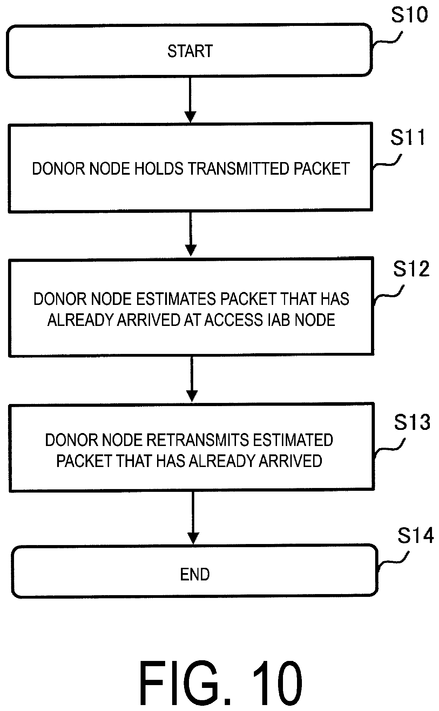

FIG. 10 is a flowchart illustrating an operation example of the option D1 for the downstream direction according to the first embodiment.

As illustrated in FIG. 10, in step S10, the donor node 200 starts processing.

In step S11, the donor node 200 holds a packet that has already been transmitted in the downstream direction in a memory or the like.

In step S12, the donor node 200 changes the routing configurations for (all) the IAB nodes 300 in the topology and then estimates whether a packet having a header according to the routing configurations before the change (i.e., the transmitted packet) has already arrived at the access IAB node. For example, the donor node 200 calculates the number of packets that arrive at the access IAB node per unit time from a past transmission history, and estimates the number of packets that have already arrived at the access IAB node 300-A, based on a time interval after the routing configuration change until the current time. Note that the CU of the donor node 200 may change the routing configuration for the IAB-DU of the access IAB node 300-A by using a message by an F1AP protocol.

In step S13, the donor node 200 applies a header according to the changed routing configuration to a packet transmitted for a certain past period of time, and retransmits (blindly retransmits) the packet. For example, the donor node 200 may specify the packet transmitted the certain period of time earlier by calculating how far back to the past based on the estimated number of packets that have already arrived and the number of transmitted packets transmitted after the routing configuration change until the current time.

In step S14, the donor node 200 ends the series of processing operations.

### Option D2 for Downstream Direction

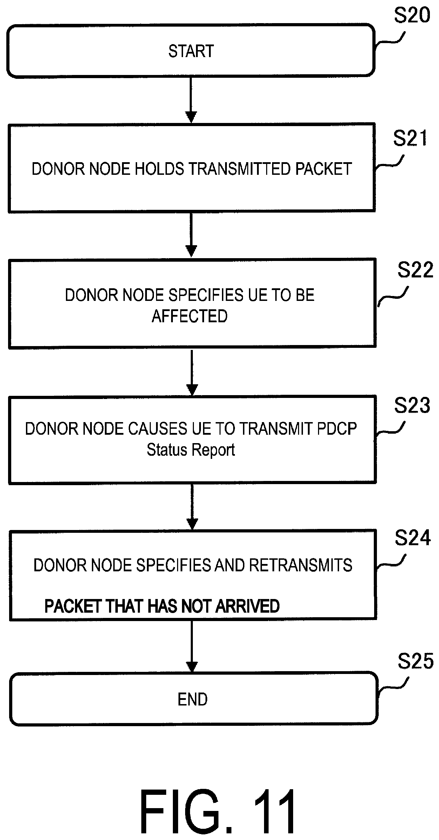

FIG. 11 is a flowchart illustrating an operation example of the option D2 for the downstream direction according to the first embodiment.

As illustrated in FIG. 11, in step S20, the donor node 200 starts processing.

In step S21, the donor node 200 holds a packet that has already been transmitted in the downstream direction in a memory or the like.

In step S22, the donor node 200 changes the routing configurations for (all) the IAB nodes 300 in the topology and then specifies a UE 100 likely to be affected. For example, the donor node 200 may specify a UE 100 in an RRC connected state with the donor node 200 as the UE 100 likely to be affected.

In step S23, the donor node 200 indicates to the UE 100 that the UE 100 is to transmit a PDCP Status Report. For example, the CU of the donor node 200 transmits the indication to the UE 100 using an RRC message.

In step S24, the donor node 200 receives the PDCP status report from the UE 100, and specifies a packet that has not arrived at the UE 100 based on a First Missing Count (FMC) included in the report. Then, the donor node 200 applies a header according to the changed routing configuration to the packet, and retransmits the packet. Note that the CU of the donor node 200 may receive the PDCP status report from the UE 100 using an RRC message.

Then, the donor node 200 ends the series of processing operations.

### Option U1 for Upstream Direction

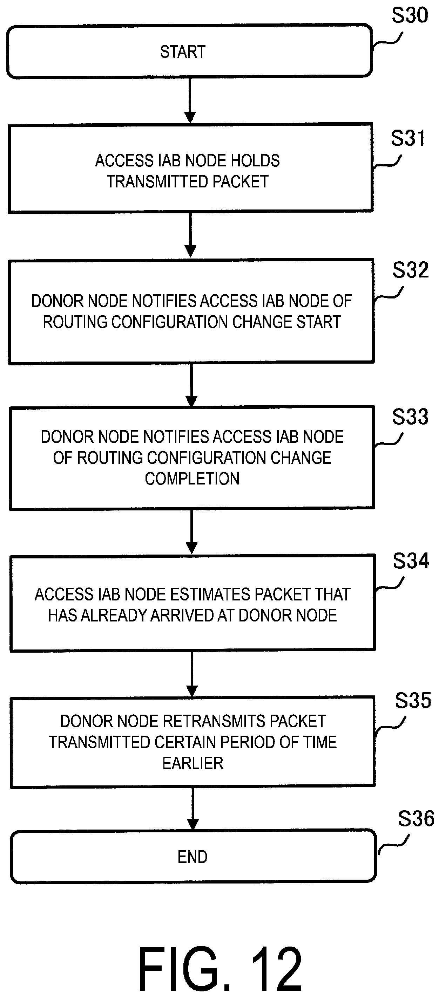

FIG. 12 is a flowchart illustrating an operation example of the option U1 for the upstream direction according to the first embodiment.

As illustrated in FIG. 12, in step S30, the access IAB node 300-A starts processing.

In step S31, the access IAB node 300-A holds a packet that has already been transmitted in the upstream direction in a memory or the like.

In step S32, the donor node 200, when starting the routing configuration change for the IAB node 300 associated with the access IAB node 300-A in the topology, transmits the routing configuration change start message to the access IAB node 300-A. The routing configuration change start message is a message indicating that the change of the routing configuration is started. For example, the CU of the donor node 200 may transmit the message as an F1AP message to the IAB-DU of the access IAB node 300-A. Alternatively, for example, the CU of the donor node 200 may transmit the message as an RRC message to the access IAB-MT of the IAB node 300-A.

In step S33, the donor node 200, when completing the routing configuration change for the IAB node 300 associated with the access IAB node 300-A in the topology, transmits the routing configuration change completion message to the access IAB node 300-A. The routing configuration change completion message is a message indicating that the change of the routing configuration is completed. For example, the message may be transmitted as an F1AP message or an RRC message. Note that the routing configuration change completion message may include a time required to change the routing configuration. The time may be represented by a time interval from a routing configuration start time to a routing configuration end time.

In step S34, the access IAB node 300-A estimates, based on the routing configuration change start message and the routing configuration change completion message, a packet that has already arrived at the donor node 200 among the transmitted packets. For example, the access IAB node 300-A may estimate the packet that has already arrived, in a way described below. In other words, the access IAB node 300-A calculates a change time required for changing the routing configuration from a reception time at which the routing configuration change start message is received and a reception time at which the routing configuration change completion message is received. The access IAB node 300-A calculates the number of packets arriving at the donor node 200 per unit time from the past history. Then, the access IAB node 300-A estimates packets that have already arrived based on the change time and the number of packets.

In step S35, the access IAB node 300-A applies a header according to the changed routing configuration to a packet transmitted a certain period of time earlier, and retransmits (or blindly retransmits) the packet. For example, the access IAB node 300-A may retransmit, as packets transmitted a certain period of time earlier, the transmitted packets held in the memory excluding the estimated packets that have already arrived. Alternatively, for example, the access IAB node 300-A may retransmit, as packets transmitted a certain period of time earlier, the transmitted packets that have been transmitted for the change time required for changing the routing configuration as the certain period of time. The access IAB node 300-A retransmits, based on the routing configuration change start message and the routing configuration change completion message, a packet transmitted in the upstream direction a certain period of time earlier.

In step S36, the donor node 200 ends the series of processing operations.

### Option U2 for Upstream Direction

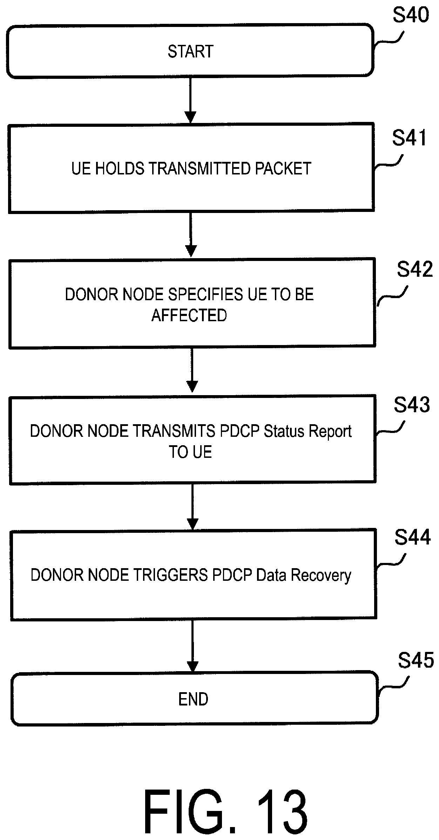

FIG. 13 is a flowchart illustrating an operation example of the option U2 for the upstream direction according to the first embodiment.

As illustrated in FIG. 13, in step S40, the UE 100 starts processing.

In step S41, the UE 100 holds a transmitted PDCP Data Service Data Unit (SDU) in a memory or the like. At this time, the UE 100 configures a Discard Timer value that is longer than usual. This is to prevent the PDCP SDU from being discarded due to timer expiry in consideration of an arrival delay of a multi-hop transfer from the UE 100 to the donor node 200.

In step S42, the donor node 200 changes the routing configurations for (all) the IAB nodes 300 in the topology and then specifies a UE 100 likely to be affected. The donor node 200 may specify a UE 100 in an RRC connected state with the donor node 200 as the UE 100 likely to be affected.

In step S43, the donor node 200 transmits a PDCP status report to the UE 100. Note that the UE 100 discards a packet that has already arrived (PDCP Data SDU) in accordance with the PDCP status report.

In step S44, the donor node 200 triggers PDCP Data Recovery. The UE 100 retransmits the PDCP Data SDU held by the UE 100 to the access IAB node 300-A. The access IAB node 300-A applies a header according to the changed routing configuration to the packet, and transmits the packet to the next hop node.

In step S45, the donor node 200 ends the series of processing operations.

### Second Operation Example according to First Embodiment

The first operation example according to the first embodiment described above has described that the packet loss is compensated for by retransmitting a packet transmitted a certain period of time earlier.

However, a method of dealing with the routing error itself is not discussed in the first operation example. Hence, an unnecessary packet due to a routing error may be transferred in the topology, causing an unnecessary resource to be consumed.

To address this, in the second operation example, an example is described in which each IAB node 300 stops the routing processing from before the routing configuration change to the completion of the routing configuration change, and after the routing processing is resumed, rewrites the header of a packet held in the memory until then and retransmits the packet.

Specifically, first, a donor node (e.g., the donor node 200) transmits a routing stop instruction message to a relay node (e.g., the IAB node 300) in a topology. Second, the relay node stops routing processing in accordance with the routing stop instruction message, and holds a received packet in the memory. Third, the donor node changes the routing configuration, and transmits mapping information between the routing ID before the routing configuration change and the routing ID after the routing configuration change, to the relay node. Fourth, the relay node resumes the routing processing, rewrites the header of the packet held in the memory in accordance with the mapping information, and transmits the packet.

As described above, each IAB node 300 stops the routing processing and holds the packet in the memory before and after the routing configuration change. This prevents a packet with a routing error from being transferred in the topology. Each IAB node 300, after the routing processing is resumed, rewrites the routing ID included in the header of the packet held in the memory until then by using the mapping information before and after the routing configuration change. This allows the packet having the rewritten correct routing ID after the routing configuration change to be transferred within the topology. Therefore, the routing error can be prevented.

In the second operation example according to the first embodiment, there are two options (option C1 and option C2). Firstly, the option C1 is described. Both of the two options can be implemented for transmission of a packet in both the downstream and upstream directions.

### Option C1

The donor node 200, when changing the routing configuration, changes the path ID of each routing ID and does not change the Destination before and after the routing configuration change.

Next, the IAB node 300 receives the packet according to the routing configuration before the routing configuration change.

Next, when the path ID included in the routing ID of the packet is not present in the changed routing configuration, the IAB node 300 performs local re-routing to the Destination. In the changed routing configuration, the Destination included in the packet is present as an entry even when the path ID included in the packet is not present. Therefore, the IAB node 300 can perform the local re-routing to the correct Destination. The local re-routing is to route a packet to an alternative path without regard to the routing configuration.

However, although 1024 (10 bits) Destinations can be configured, when the number of DUs of the IAB node 300 and the donor node 200 in the topology approaches 1024, the same Destination may be used. In this case, a routing error may possibly occur in the option C1.

### Option C2

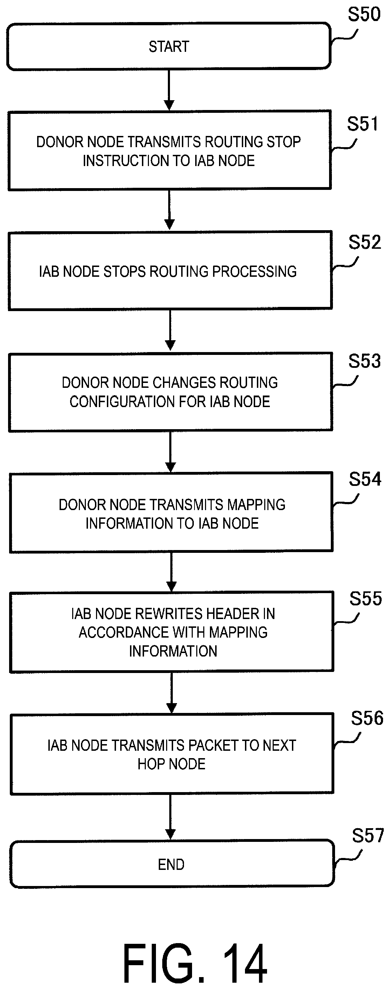

FIG. 14 is a flowchart illustrating an operation example of the option C2 according to the first embodiment.

As illustrated in FIG. 14, in step S50, the donor node 200 starts processing.

In step S51, the donor node 200 transmits a routing stopping instruction message indicating a routing processing stop to (all or some of) the IAB nodes 300 in the topology before changing the routing configurations for the IAB nodes 300 in the topology. The routing stop instruction message may be transmitted as an F1AP message or an RRC message.

In step S52, the IAB nodes 300 each stop the routing processing in response to receiving the routing stop instruction message, and hold a received packet (BAP Data PDU) in the memory or the like.

In step S53, the donor node 200 changes the routing configurations for (all or some of) the IAB nodes 300 in the topology. For example, the CU of the donor node 200 may change the routing configuration by transmitting the changed routing configuration to the IAB-DU of the IAB node 300 using an F1AP message.

In step S54, the donor node 200 transmits the mapping information indicating a correspondence relationship between the routing ID before the routing configuration change and the routing ID after the routing configuration change to (all or some of) the IAB nodes 300 in the topology. The mapping information may be transmitted by way of an F1AP message or an RRC message. Note that in the IAB node 300, reception of the mapping information may be a trigger for resuming the routing processing. Alternatively, the donor node 200, after transmitting the mapping information, may transmit a routing resume instruction message to (all or some of) the IAB nodes 300 in the topology. The routing resume instruction message may also be transmitted as an F1AP message or an RRC message. The IAB node 300 resumes the routing processing in response to receiving the routing resume instruction message.

In step S55, the IAB nodes 300 resume the routing processing and rewrite the (BAP) header of the packet (BAP Data PDU) held in the memory in accordance with the mapping information. Specifically, the BAP layer (or BAP entity, hereinafter, the BAP layer and the BAP entity may not be distinguished from each other) of the IAB node 300 rewrites the routing ID included in the header (the routing ID before the routing configuration change) to the routing ID after the routing configuration change in accordance with the mapping information. Note that the IAB node 300, after receiving the mapping information (or after resuming the routing processing), does not rewrite the header of a newly received packet in accordance with the mapping information. The IAB node 300 may discard the mapping information when completing the header rewriting in accordance with the mapping information for all the packets held in the memory.

In step S56, the IAB nodes 300 each perform the routing processing for the packet, based on the changed routing configuration and transmits the packet to the next hop node.

In step S57, the series of processing operations is ended.

### Second Embodiment

A second embodiment is described.

The second embodiment describes header rewriting of a packet in the downstream direction.

The IAB nodes 300 include an IAB node belonging to a plurality of topologies. Such an IAB node is referred to as a boundary IAB node (boundary IAB node).

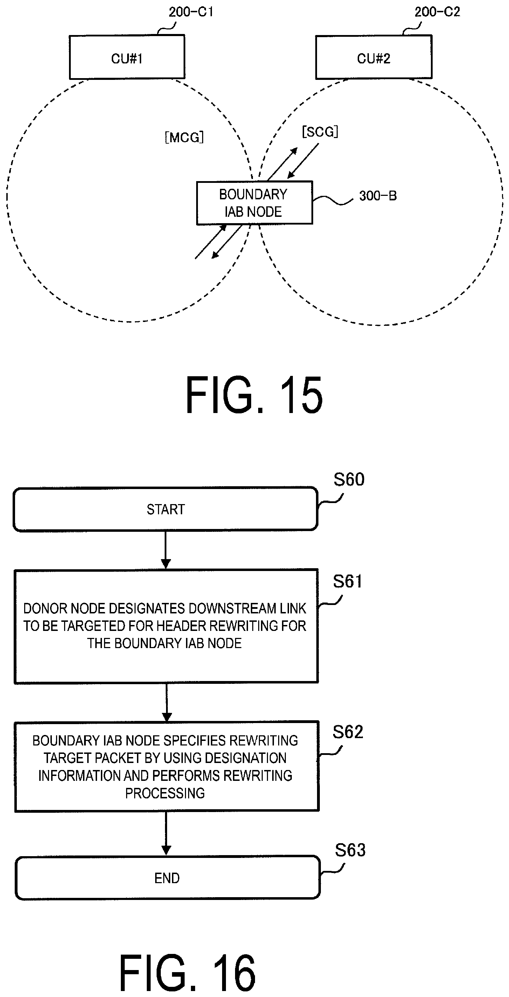

FIG. 15 is a diagram illustrating an example of a boundary IAB node 300-B according to the second embodiment. In the example illustrated in FIG. 15, the boundary IAB node 300-B belongs to two topologies, a topology including a CU #1 (200-C1) of the donor node 200 and a topology including a CU #2 (200-C2) of another donor node.

Note that in the second embodiment, the topology including the CU #1 (200-C1) may be referred to as a main topology, and the topology including the CU #2 (200-C2) may be referred to as a sub-topology.

The boundary IAB node 300-B performs header rewriting processing in Inter-CU routing. The inter-CU routing is, for example, to route a packet from a first topology managed by a first CU to a second topology managed by a second CU.

For the inter-CU routing in the upstream direction, the boundary IAB node 300-B performs processing of causing a packet flown in from the main topology to flow out to the sub-topology. To be more specific, the BAP layer of the boundary IAB node 300-B uses a header rewriting table (Header Rewriting Configuration) to rewrite the header of the packet (e.g., by rewriting the routing ID, rewrite the Destination from the CU #1 (200-C1) to the CU #2 (200-C2)), and transfers the packet. The upstream-direction header rewriting table is managed by the CU #1 (200-C) on the main topology side.

On the other hand, for the inter-CU routing in the downstream direction, the boundary IAB node 300-B performs processing of causing a packet flown in from the sub-topology to flow out to the main topology. To be more specific, the BAP layer of the boundary IAB node 300-B uses the header rewriting table to rewrite the header of the packet (e.g., rewrite the Destination from the access IAB node of the sub-topology to the access IAB node of the main topology by rewriting the routing ID), and transfers the packet. The downstream-direction header rewriting table is managed by the CU #2 (200-C2) on the sub-topology side.

Here, in the boundary IAB node 300-B, the routing configuration and the upstream-direction header rewriting table are managed by the same donor node 200 (or CU #1 (200-C)). Therefore, the boundary IAB node 300-B can judge whether to perform the header rewriting in the upstream direction, depending on whether the entry is present with reference to the header rewriting table.

On the other hand, in the boundary IAB node 300-B, the downstream-direction header rewriting table is managed by the sub-topology (CU #2 (200-C2)) as described above. The routing ID of the sub-topology is managed by the CU #2 (200-C2), and the routing ID of the main topology is managed by the CU #1 (200-C1). For this reason, the routing ID in the main topology may match the routing ID in the sub-topology. When rewriting the header in the downstream direction, the boundary IAB node 300-B rewrites the header without distinguishing the routing ID in the main topology side and the routing ID in the sub-topology side. Therefore, the boundary IAB node 300-B may erroneously cause the packet to flow out to the sub-topology side upon the inter-CU routing in the downstream direction.

Therefore, the 3GPP discusses the downstream-direction header rewriting processing that a header of a packet flown in from a Secondary Cell Group (SCG) of the boundary IAB node 300-B is targeted for header rewriting.

However, the SCG side does not necessarily belong to the sub-topology. When a Master Cell Group (MCG) is in the sub-topology, a packet in a downstream direction flown in from the sub-topology is not targeted for header rewriting. Conversely, a packet flown in from the SCG in the main topology side is targeted for header rewriting.

Therefore, in the second embodiment, an example is described in which the donor node 200 designates, for the boundary IAB node 300-B, a link targeted for header rewriting in the downstream direction (or a parent node of the boundary IAB node 300-B).

Specifically, first, the donor node (e.g., the donor node 200) transmits designation information designating a downstream link, to a boundary relay node (e.g., the boundary IAB node 300-B). Second, the boundary relay node performs header rewriting processing on the packet flown in from the downstream link, in accordance with the designation information.

This allows, for example, the boundary IAB node 300-B to specify the packet targeted for header rewriting, appropriately performing the downstream-direction header rewriting processing.

### Operation Example according to Second Embodiment

FIG. 16 is a flowchart illustrating an operation example according to the second embodiment.

As illustrated in FIG. 16, in step S60, the donor node 200 starts processing.

In step S61, the donor node 200 transmits designation information designating a downstream link (or an ingress link) targeted for header rewriting to the boundary IAB node 300-B. The designation information includes an ingress link which requires header rewriting (or is targeted for header rewriting). Specifically, the designation information may include an MCG or an SCG requiring header rewriting. The designation information may include the BAP address or cell ID of the parent node requiring header rewriting. The designation information may further include a link corresponding to the topology. For example, the designation information may include information indicating that the main topology is the MCG and the sub-topology is the SCG, or that the main topology is the SCG and the sub-topology is the MCG. In this case, the MCG or the SCG designated as the sub-topology is a link requiring header rewriting. Note that the designation information may be included in an F1AP message or an RRC message to be transmitted.

In step S62, the BAP layer of the boundary IAB node 300-B specifies a packet targeted for rewriting as a packet flown in from the downstream link designated as the designation information, in accordance with the designation information, and performs the header rewriting processing on the packet.

In step S63, the series of processing operations is ended.

### Third Embodiment

A third embodiment is described.

In the third embodiment, an example is described in which various types of header rewriting tables are classified.

The 3GPP discusses how to make header rewriting tables configured for the boundary IAB node 300-B different between the UL direction (or upstream direction) and the DL direction (or downstream direction) upon the inter-CU routing.

As for the header rewriting tables, when different tables are used for the UL direction and the DL direction, the BAP layer may perform processing of specifying the ingress direction for each packet. In other words, the BAP layer, after specifying the ingress direction for each packet, performs the header rewriting processing using a UL header rewriting table and/or a DL header rewriting table.

However, the boundary IAB node 300-B performing such processing increases the processing of the inter-CU routing. In addition, the BAP layer exchanges information with other layers in order to specify the ingress direction of the packet, which increases dependency on the other layers.

Therefore, the third embodiment classifies the header rewriting tables used for the inter-CU routing into a table used in the IAB-MT and a table used in the IAB-DU of the boundary IAB node 300-B.

Specifically, first, a donor node (e.g., the donor node 200) configures a first header rewriting table including first classification information and a second header rewriting table including second classification information for a boundary relay node (e.g., the boundary IAB node 300-B). Second, the boundary relay node performs the header rewriting processing on the packet by using the first header rewriting table and/or the second header rewriting table.

Here, the first header rewriting table is a first inter-CU routing header rewriting table used by a user equipment functional unit (IAB-MT) of the boundary relay node, and the second header rewriting table is a second inter-CU routing header rewriting table used by a base station functional unit (IAB-DU) of the boundary relay node.

The header rewriting processing includes performing, by the user equipment functional unit, the header rewriting on the packet with reference to the first inter-CU routing header rewriting table, and performing, by the base station functional unit, the header rewriting on the packet with reference to the second inter-CU routing header rewriting table.

As described above, in the third embodiment, the header rewriting tables are classified into the table used in the IAB-MT and the table used in the IAB-DU, and are not classified based on the UL direction and the DL direction. Therefore, the increasing processing can be suppressed which is caused by specifying the DL direction or the UL direction for each packet. The increasing dependency of the BAP layer with other layers can also be suppressed. Furthermore, since each of the IAB-MT and the IAB-DU only needs to perform the header rewriting processing by using the configured header rewriting table, the header rewriting processing can be appropriately performed.

Note that "UL" and "DL" may be used to mean, for example, the following. In other words, when a packet is transferred from the first topology to the second topology, "UL" may apply. When a packet is transferred from the second topology to the first topology, "DL" may apply. Note that a packet transferred from the first topology to the first topology (i.e., in the same topology) is not targeted for header rewriting.

### First Operation Example according to Third Embodiment

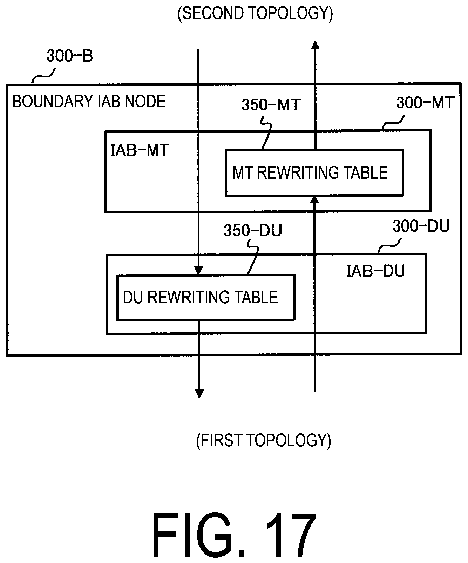

FIG. 17 is a diagram illustrating a configuration example of the boundary IAB node 300-B according to the third embodiment.

As illustrated in FIG. 17, an IAB-MT (300-MT) includes an inter-CU routing header rewriting table 350-MT. The header rewriting table 350-MT is a table for performing the header rewriting for a packet in the UL direction.

An IAB-DU (300-DU) includes an inter-CU routing header rewriting table 350-DU. The header rewriting table 350-DU is a header rewriting table for a packet in the DL direction.

Note that in the first operation example according to the third embodiment, the header rewriting table 350-MT in the IAB-MT (300-MT) may be referred to as an MT rewriting table 350-MT, and the header rewriting table 350-DU in the IAB-DU (300-DU) may be referred to as a DU rewriting table 350-DU.

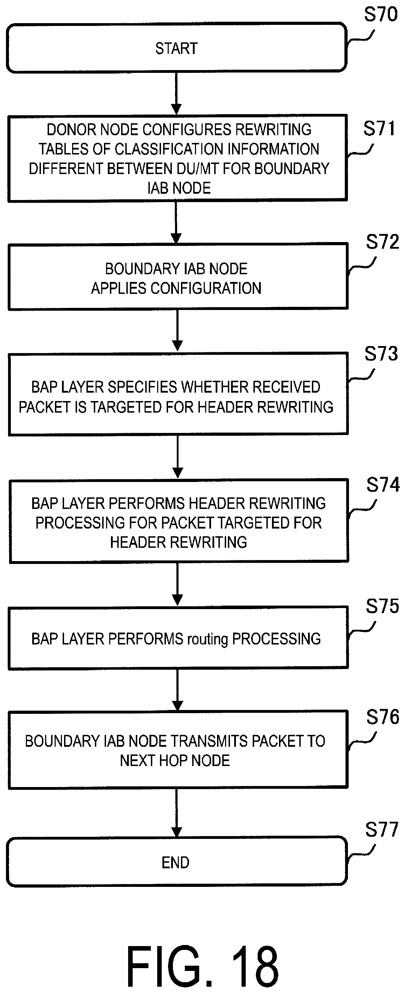

FIG. 18 is a flowchart illustrating the first operation example according to the third embodiment.

As illustrated in FIG. 18, in step S70, the donor node 200 starts processing.

In step S71, the donor node 200 configures inter-CU routing rewriting tables including classification information different between the DU and the MT for the boundary IAB node 300-B. For example, the donor node 200 configures the MT rewriting table 350-MT including the first classification information and the DU rewriting table 350-DU including the second classification information for the boundary IAB node 300-B.

The classification information may be information for DU and for MT for the two rewriting tables. The classification information is associated with each rewriting table. The classification information may be names for distinguishing two rewriting tables. For example, the names may be "BAP Header Rewriting Configuration for IAB-DU" and "BAP Header Rewriting Configuration for IAB-MT". Alternatively, the rewriting table itself may be one table, and each entry (e.g., an entry including an old routing ID and a new routing ID) may be associated with the classification information for DU and for MT.

Note that each rewriting table including the classification information may be transmitted using an F1AP message or an RRC message, for example.

In step S72, the boundary IAB node 300-B applies the configuration. Since the rewriting table includes the classification information, the boundary IAB node 300-B can easily judge at which position (IAB-MT (300-MT) or IAB-DU (300-DU)) to configure the configured rewriting table.

In step S73, the BAP layer of the boundary IAB node 300-B receives a packet (BAP Data PDU) from an upper layer or a previous hop node, and specifies whether or not the received packet is targeted for header rewriting. The BAP transmitter (BAP Tx part) of the IAB-MT may refer to the header rewriting table 350-MT configured for the IAB-MT (300-MT), and may specify the received packet to be targeted for header rewriting when the routing ID included in the BAP header of the received packet matches the old routing ID of the header rewriting table 350-MT. On the other hand, the BAP transmitter may specify the received packet not to be targeted for header rewriting when routing ID matching the routing ID included in the BAP header of the received packet is absent in the old routing ID of the header rewriting table 350-MT. Similarly, the BAP transmitter (BAP Tx) of the IAB-DU (300-DU) may refer to the header rewriting table 350-DU configured for the IAB-DU (300-DU), and may specify the received packet to be targeted for header rewriting when the routing ID included in the BAP header of the received packet matches the old routing ID of the header rewriting table 350-DU, or may specify the packet not to be targeted for header rewriting when the routing ID and the old routing ID do not match.

In step S74, the BAP layer of the boundary IAB node 300-B performs the header rewriting processing on the packet targeted for header rewriting. The BAP transmitter of the IAB-MT (300-MT) refers to the MT rewriting table 350-MT (e.g., the first inter-CU routing header rewriting table) configured for the IAB-MT (300-MT) to rewrite the BAP header of the packet from the old routing ID to the new routing ID. The BAP transmitter of the IAB-DU (300-DU) refers to the DU rewriting table 350-DU (e.g., the second inter-CU routing header rewriting table) configured for the IAB-DU (300-DU) to rewrite the BAP header of the packet from the old routing ID to the new routing ID.

In step S75, the BAP layer of the boundary IAB node 300-B performs the routing processing in accordance with the routing configuration.

In step S76, the boundary IAB node 300-B transmits the packet to the next hop node.

In step S77, the series of processing operations is ended.

### Second Operation Example according to Third Embodiment

In the first operation example according to the third embodiment, the example is described in which the inter-CU routing header rewriting tables are classified. In the second operation example according to the third embodiment, an example is described in which an inter-CU routing header rewriting table and an inter-CU re-routing header rewriting table (or inter-DU re-routing) are classified.

The IAB node 300 may perform re-routing. For example, the re-routing is performed when a received packet cannot be transmitted for some reason although the routing processing is performed on the received packet by using the routing configuration. The re-routing is performed after the routing processing.

Such re-routing may be performed across the topologies. For example, in the boundary IAB node 300-B, when the routing processing is performed on a packet flown in from the first topology to the first topology in the UL direction, but the packet cannot be transmitted, the packet is re-routed to the second topology. Also in this case, the boundary IAB node 300-B can perform re-routing to the second topology by performing the header rewriting processing.

For example, for FIG. 15, the boundary IAB node 300-B changing the routing ID through the header rewriting processing causes the Destination to be changed from the CU #1 (200-C1) to the CU #2 (200-C2). Such re-routing across CUs is referred to as inter-CU re-routing.

For example, in FIG. 15, when the CU #1 is the DU #1 and the CU #2 is the DU #2, the routing ID being changed through the header rewriting processing may cause the Destination to be changed from the DU #1 to the DU #2. Such re-routing across DUs is referred to as inter-DU re-routing (inter-donor-DU re-routing).

The inter-CU re-routing and the inter-DU re-routing (inter-donor-DU re-routing) may be collectively referred to as "header rewriting based re-routing". The header rewriting based re-routing may include the inter-CU re-routing and/or the inter-DU re-routing.

Re-routing within the same topology is referred to as local re-routing.

The header rewriting based re-routing is performed when the packet cannot be transmitted although the routing processing is performed. Therefore, the header rewriting based re-routing is performed after the routing processing.

On the other hand, in the inter-CU routing, the header rewriting processing is performed before the routing processing to transmit the received packet to a different topology. Therefore, the inter-CU routing is performed before the routing processing.

Here, a case is assumed in which the inter-CU routing header rewriting table and the header rewriting based re-routing header rewriting table are combined into one table. In this case, the boundary IAB node 300-B may not know whether to perform processing for the routing ID (old routing ID) in the table before or after the routing processing. Therefore, the boundary IAB node 300-B may not be able to appropriately perform the inter-CU routing and the header rewriting based re-routing.

Therefore, in the second operation example according to the third embodiment, an example is described in which the inter-CU routing header rewriting table and the header rewriting based re-routing header rewriting table are classified separately from each other.

Specifically, the first header rewriting table is an inter-CU routing header rewriting table, and the second header rewriting table is a header rewriting based re-routing header rewriting table.

Accordingly, for example, the BAP layer of the boundary IAB node 300-B can distinguish the two tables to perform the header rewriting processing. Specifically, the BAP layer can use the inter-CU routing header rewriting table when performing the inter-CU routing processing before the routing processing, and use the header rewriting based re-routing header rewriting table when performing the header rewriting based re-routing processing after the routing processing. Therefore, the boundary IAB node 300-B can appropriately perform the inter-CU routing and the header rewriting based re-routing.

Note that in the second operation example according to the third embodiment, the inter-CU routing header rewriting table may be referred to as a "routing header rewriting table". The header rewriting based re-routing header rewriting table may be referred to as a "re-routing header rewriting table".

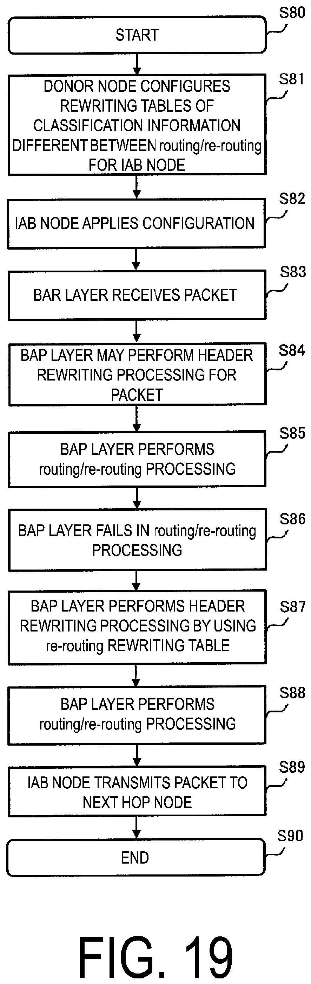

FIG. 19 is a flowchart illustrating the second operation example according to the third embodiment.

As illustrated in FIG. 19, in step S80, the donor node 200 starts processing.

In step S81, the donor node 200 configures the routing header rewriting table and the re-routing header rewriting table to have different classification information, for the boundary IAB node 300-B. For example, the donor node 200 configures the routing header rewriting table including the first classification information and the re-routing header rewriting table including the second classification information, for the boundary IAB node 300-B.

The classification information may be information for two respective rewriting tables for re-routing (or for inter-CU routing) and for re-routing (or for header rewriting based re-routing). In this case, the classification information is associated with each rewriting table. The classification information may be names for distinguishing the two rewriting tables. For example, the names may be "BAP Header Rewriting Configuration for routing" and "BAP Header Rewriting Configuration for re-routing". Alternatively, the rewriting table itself may be one table, and each entry (e.g., an entry including the old routing ID and the new routing ID) may be associated with the classification information for routing and for re-routing.

Note that each rewriting table including the classification information may be transmitted using an F1AP message or an RRC message, for example.

In step S82, the boundary IAB node 300-B applies the configuration.

In step S83, the BAP layer of the boundary IAB node 300-B receives a packet (BAP Data PDU) from an upper layer or a previous hop node.

In step S84, the BAP layer may perform the inter-CU routing header rewriting processing on the packet. The BAP layer refers to the routing header rewriting table to perform the inter-CU routing header rewriting processing when the old routing ID is present that is the same as the routing ID of the packet. The BAP layer can easily identify the table because the routing header rewriting table includes the classification information. However, at this timing, the BAP layer does not refer to the re-routing header rewriting table and does not perform the header rewriting based re-routing.

In step S85, the BAP layer performs the routing processing and/or the re-routing processing. The re-routing processing at this timing is local re-routing processing. In other words, this is a case that the BAP layer performs the routing processing, but proceeds to step S85 again to perform the local re-routing processing.

In step S86, the BAP layer fails in routing and/or re-routing.

Here, "failing in routing" may mean that a next hop address (Next Hop BAP address) cannot be selected under a certain evaluation condition. The evaluation condition may be whether the Destinations and the path IDs match in the header of the packet and the routing table (routing configuration). Alternatively, the evaluation condition may be whether only the Destinations match in the header of the packet and the routing table.

In step S87, the BAP layer performs the header rewriting processing on the packet by using the re-routing header rewriting table when the packet is targeted for header rewriting based re-routing. The BAP layer may specify whether the packet is targeted for header rewriting based re-routing. In other words, the BAP layer may specify the packet to be targeted for header rewriting based re-routing when the old routing ID matching the routing ID included in the BAP header of the packet is present in the re-routing header rewriting table. On the other hand, the BAP layer may specify the packet not to be targeted for header rewriting based re-routing when the old routing ID matching the routing ID included in the BAP header of the packet is absent in the re-routing header rewriting table. The BAP layer refers to the re-routing header rewriting table to rewrite the BAP header of the packet from the old routing ID to the new routing ID.

In step S88, the BAP layer performs the routing processing or header rewriting based re-routing processing on the packet.

In step S89, the boundary IAB node 300-B transmits the packet to the next hop node in accordance with the routing processing or the header rewriting based re-routing processing.

In step S90, the series of processing operations is ended.

Note that in the third embodiment, a common header rewriting table is assumed to be used for the inter-CU re-routing and the inter-DU re-routing. Therefore, in the third embodiment, the classification information for classifying the inter-CU re-routing and the inter-DU re-routing is not used.

### Fourth Embodiment

A fourth embodiment is described.

The header rewriting may be performed many times for one packet in some cases. This is the following case, for example. In other words, the boundary IAB node 300-B rewrites the header of the packet through the inter-CU routing, but fails in the routing. Next, the boundary IAB node 300-B rewrites the header of the packet of the packet through the inter-DU re-routing, but fails in the routing again.

In both the header rewriting table used for the inter-CU routing and the header rewriting table used for the header rewriting based re-routing, it is assumed that the old routing ID included in the entry is the routing ID before the header rewriting.

However, when the header rewriting is performed using the header rewriting table, the routing ID after rewriting is included in the header of the packet. In such a case, when the header rewriting processing is performed based on the rewritten routing ID after rewriting, the boundary IAB node 300-B may not be able to appropriately perform the inter-CU routing or the header rewriting based re-routing.

To address this, in the fourth embodiment, an example is described in which the header of the packet is restored to the original routing ID upon failure of the routing (or the re-routing) after the header is rewritten.

Specifically, first, a boundary relay node (e.g., the boundary IAB node 300-B) upon failing in routing after performing header rewriting on the packet by using the inter-CU routing header rewriting table, restores the rewritten routing ID to the routing ID before the rewriting. Second, the boundary relay node, upon failing in routing after performing header rewriting on the packet by using the re-routing header rewriting table, restores the rewritten routing ID to the routing ID before the rewriting.

This allows the boundary IAB node 300-B to appropriately perform the inter-CU routing or the header rewriting based re-routing because the routing ID is restored to the original routing ID upon failing in the routing even when the header is rewritten through the header rewriting.

### Operation Example according to Fourth Embodiment

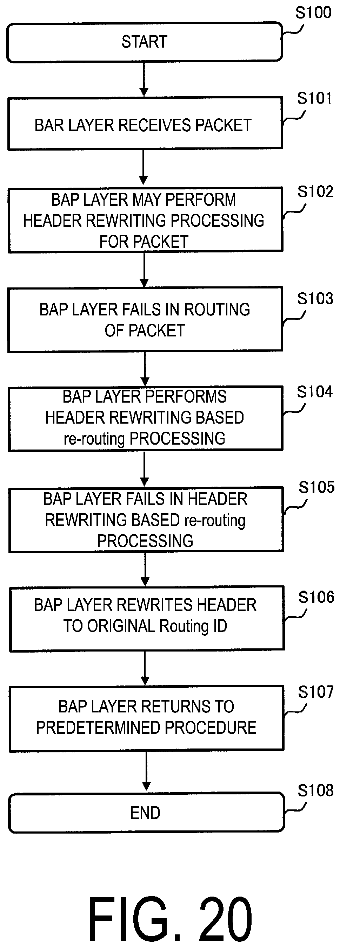

FIG. 20 is a flowchart illustrating an operation example according to the fourth embodiment.

As illustrated in FIG. 20, in step S100, the BAP layer of the boundary IAB node 300-B starts processing.

In step S101, the BAP layer receives a packet.

In step S102, the BAP layer may perform the inter-CU routing header rewriting processing on the packet. When an old routing ID matching the routing ID of the packet is present in the routing header rewriting table, the header rewriting processing is performed. The BAP layer, when performing the header rewriting processing, may record (or store) information indicating that the header rewriting processing is already performed for the inter-CU routing, in a memory or the like. Alternatively, the BAP layer may record information indicating that the header rewriting processing is already performed, in a memory or the like.

In step S103, the BAP layer fails in routing the packet. The BAP layer, when performing the inter-CU routing header rewriting processing and failing in the routing, restores the routing ID to the original old routing ID. In this case, the BAP layer may discard (or set as unprocessed) the information recorded in the memory or the like and on which the rewriting processing has already been performed.

In step S104, the BAP layer performs the header rewriting based re-routing header rewriting processing on the packet. At this time, the BAP layer may record, in the memory or the like, information indicating that the header rewriting processing for any one of the inter-CU re-routing, the inter-DU re-routing, and the header rewriting based re-routing is already performed. Alternatively, the BAP layer may record information indicating that the header rewriting processing is already performed.

In step S105, the BAP layer fails in the header rewriting based re-routing processing.

In step S106, the BAP layer restores (rewrites) the header of the packet rewritten in step S104 to the original routing ID (old routing ID). In this case, the BAP layer may discard (or set as unprocessed) the information recorded in the memory or the like and on which the rewriting processing has already been performed.

In step S107, the BAP layer returns the packet to a predetermined procedure such as routing processing.

In step S108, the series of processing operations is ended.

### Another Operation Example according to Fourth Embodiment

In the fourth embodiment, another operation example is described. In the example described in the operation example described above, the header is restored to the original routing ID due to the routing failure or the re-routing failure after the header rewriting. However, the original routing ID may be restored by restoring the packet. In particular, in step S101, when the BAP layer receives a packet, a copy of the packet is stored in the memory. Next, in step S103, the BAP layer, when failing in the routing, discards the packet (whose header is already rewritten) and acquires the copy of the packet from the memory. In step S105, the BAP layer, when failing in the header rewriting based re-routing processing, discards the packet (whose header is already rewritten) and acquires the copy of the packet from the memory. Thus, the boundary IAB node 300-B can restore the original routing ID without rewriting the header again.

### Fifth Embodiment

A fifth embodiment is described.

In the 3GPP, a study is underway to mainly target user data for the inter-CU routing. On the other hand, the inter-CU routing is also possible for an F1-C (control signaling) traffic. For example, the boundary IAB node 300-B can transmit an F1-C packet to the first topology or the second topology by encapsulating the F1-C packet in an RRC message by using a CP/UP separation function and transmitting the RRC message in a Split SRB1.

On the other hand, a case may be considered in which the boundary IAB node 300-B performs the inter-CU routing also for user data generated in the boundary IAB node 300-B itself (i.e., data directly received by the boundary IAB node 300-B as an access IAB node from the UE 100).

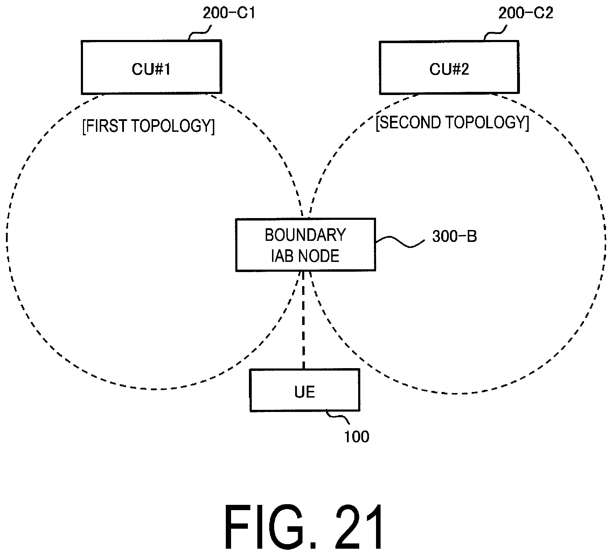

FIG. 21 is a diagram illustrating an example of the boundary IAB node 300-B according to the fifth embodiment.

In general, an access IAB node creates a BAP header and transmits a packet towards the donor node 200. For example, the access IAB node creates the BAP header, in a way described below.

In other words, the access IAB node is configured with an uplink traffic mapping configuration (Uplink Traffic to Routing ID Mapping Configuration) from the donor node 200. The uplink traffic mapping configuration includes a traffic type specifier and a BAP routing ID. Note that the uplink traffic mapping configuration is transmitted from the donor node 200 by way of an F1AP message.

When the BAP SDU received from the upper layer is an FI-U traffic, the BAP layer of the access IAB node selects an entry including the traffic type specifier corresponding to a Destination IP address and a Tunnel Endpoint Identifier (TEID) of the BAP SDU from the uplink traffic mapping configuration. On the other hand, when the BAP SDU is not an F1-U traffic, the BAP layer selects the entry including the traffic type specifier of the BAP SDU from the uplink traffic mapping configuration.

The BAP layer then selects the routing ID (Destination and path ID) of the entry from the routing ID. Then, the BAP layer generates a BAP header by using the selected routing ID, applies the BAP header to the BAP SDU, and generates a BAP PDU.

Here, when the boundary IAB node 300-B that is also the access IAB node performs the inter-CU routing, there is the following problem. In other words, the current uplink traffic mapping configuration basically includes one set of a traffic type specifier and a BAP routing ID. When this one BAP routing ID is assigned to two topologies, and thus the BAP routing ID exists in the two topologies, the boundary IAB node 300-B does not know to which topology the BAP PDU should be transmitted. Therefore, the access IAB node may not be able to appropriately perform the inter-CU routing.

To address this, in the fifth embodiment, an example is described in which the boundary IAB node 300-B that is also the access IAB node selects the routing ID associated with the topology, based on the uplink traffic mapping configuration including information of the topology to which the routing ID is applied.

Specifically, first, the donor node (e.g., the donor node 200) configures the uplink traffic mapping configuration including a topology of a packet transmission destination for the boundary relay node (e.g., the boundary IAB node 300-B). Second, the boundary relay node selects a routing ID associated with the topology, based on the uplink traffic mapping configuration. Third, the boundary relay node transmits a packet with a header including the routing ID.

This allows the boundary IAB node 300-B that is also the access IAB node to recognize which topology the routing ID is directed to, and thus appropriately generate a packet directed to the topology. Therefore, the boundary IAB node 300-B that is also the access IAB node can appropriately perform the inter-CU routing.

### Operation Example of Fifth Embodiment

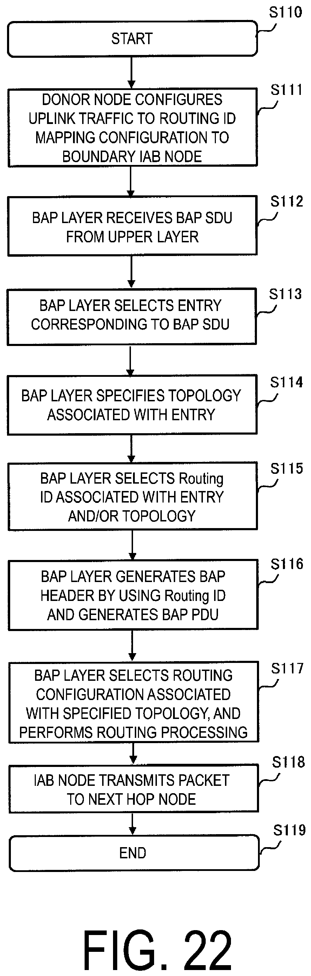

FIG. 22 is a flowchart illustrating an operation example according to the fifth embodiment.

As illustrated in FIG. 22, in step S110, the donor node 200 starts processing.

In step S111, the donor node 200 configures the uplink traffic mapping configuration for the boundary IAB node 300-B that is also the access IAB node. The uplink traffic mapping configuration includes information on a topology to apply (or the topology of a transmission destination) in addition to an existing traffic type specifier and a BAP routing ID. Hereinafter, the information may be referred to as topology information.

In other words, the topology information may be the MCG or the SCG. For example, the topology information indicates that the packet transmission destination is the MCG or the SCG. The topology information may also be the BAP address of the boundary IAB node 300-B. In other words, the BAP address of the boundary IAB node 300-B includes a BAP address configured from the first topology and a BAP address configured from the second topology. The topology information being the BAP address makes it possible to identify whether the topology of the packet transmission destination is the first topology or the second topology. Furthermore, the topology information may be represented by a topology terminating the F1-AP or a topology not terminating the F1-AP.

Optionally, the uplink traffic mapping configuration may include a bearer ID. The bearer ID represents the packet transmission destination. For example, when the traffic type specifier is user data, the BAP layer may select a transmission destination associated with each bearer ID. In this way, the transmission destination may be different for each bearer ID.

The topology information and the bearer ID may be present in each entry in the uplink traffic mapping configuration. The topology information and the bearer ID may be separately configured. For example, the boundary IAB node 300-B may be notified of (two) different uplink traffic mapping configurations for the respective topologies.

In step S112, the BAP layer of the boundary IAB node 300-B receives a BAP SDU from an upper layer.

In step S113, the BAP layer selects an entry corresponding to the BAP SDU from the uplink traffic mapping configuration.

In step S114, the BAP layer specifies a topology (or a packet transmission destination) associated with the entry from the uplink traffic mapping configuration.

In step S115, the BAP layer selects a routing ID associated with the entry and/or the topology.

In step S116, the BAP layer generates a BAP header by using the routing ID, and applies the generated BAP header to the BAP SDU to generate a BAP PDU.

In step S117, the BAP layer selects a routing configuration associated with the specified topology and performs the routing processing.

In step S118, the boundary IAB node 300-B transmits the packet to the next hop node.

In step S119, the boundary IAB node 300-B ends the series of processing operations.

### Other Embodiments

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing processing performed by the UE 100 or the gNB 200 may be integrated, and at least a part of the UE 100 or the gNB 200 may be implemented as a semiconductor integrated circuit (chipset, system on a chip (SoC)).

Embodiments have been described above in detail with reference to the drawings, but specific configurations are not limited to those described above, and various design variation can be made without departing from the gist of the present disclosure. The above-described embodiments, operation examples, processing operations, or steps can be appropriately combined as long as no inconsistencies are introduced.

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

This application claims priority to US Provisional Patent Application No. 63/296232 (filed on January 4, 2022), the contents of which are incorporated herein by reference in their entirety.

### Supplementary Note 1

### Introduction

In RAN2 #116e, in the work item of enhancements to Integrated Access and Backhaul (eIAB) for NR, the enhancement of routing and re-routing is greatly improved and the agreement content is supported as the running CR of TS38.340.

In this supplementary note, the details of routing and re-routing are discussed with a focus on what is currently believed to be fundamental over the consensus and running CR.

### Discussion

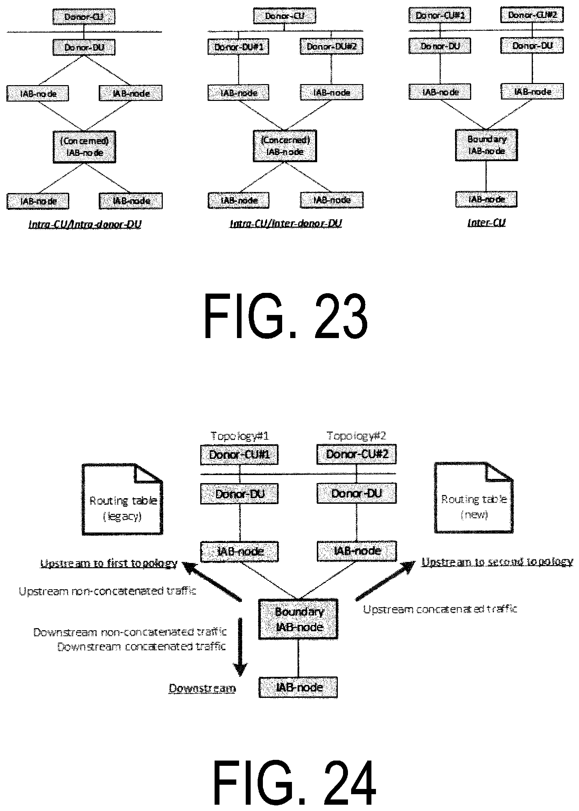

In Rel-17, as illustrated in FIG. 23, routing and re-routing need to cover various scenarios, such as those for intra-CU/intra-donor-DU (as in Rel-16), intra-CU/inter-donor-DU, and inter-CU. Although it is expected that enhancement of these functions contributes to reliability, flexibility, and low latency of packet forwarding in the IAB topology, this may bring about further complexity in the BAP routing/re-routing operation. Thus, it is desirable to define a procedure common to all of the scenarios and reduce a procedure specific to a scenario to the extent possible. In this sense, inter-CU routing, which is the most complicated scenario, needs to be studied first, and whether the procedure of inter-CU routing can be applied to (reused for) other scenarios then needs to be studied.

### Inter-CU Routing

### Decision on Header Rewriting

Items that need to be further studied regarding modeling in RX or Tx operation

In the currently running CR, the judgment on the header rewriting is based on the reception operation, and the following items that need to be further studied are introduced.

Note that a discussion can be made for whether the decision on the header rewriting is modeled by the RX operation or the TX operation.

From a technical point of view, the decision on the header rewriting is operable irrespective of whether it is modeled by the reception operation or the transmission operation. However, from a specification point of view, there are two BAP entities in the IAB-MT and the IAB-DU, i.e., "in the IAB node, the BAP sub-layer includes one BAP entity in the MT function and another co-location BAP entity in the DU function". Therefore, functional dependency between entities needs to be minimized as much as possible.

It has been confirmed that the decision on the header rewriting is highly dependent on the transmission operation. Actually, the decision result of the header rewriting does not affect the receiving operation as follows. In other words, the packet is delivered to the transmitter regardless of whether the header rewriting is decided.

### OTHER

When, in the receiver of the BAP entity in the IAB-DU of the boundary IAB node, the header rewriting configuration includes an entry in which the BAP address of the previous routing ID matches the Destination field and the BAP path identity of the previous routing ID matches the path field (defined in subclass 5.2. X), or
when, for the receiving part of the BAP entity in the IAB-MT of the boundary IAB node, the ingress link is an SCG,
the BAP data packet for BAP header rewriting is considered, and
the BAP data packet is delivered to the transmitter of the located BAP entity.

The result is used for the transmission operation as follows. In other words, header rewriting is performed only for the packet judged to be targeted for header rewriting.

When a BAP Data PDU to be transmitted is present, the transmitter of the BAP entity performs the following processing operation.

When the BAP entity receiving the BAP Data PDU rewrites the BAP header, the BAP entity rewrites the BAP header.

Routing to determine an egress link is performed.

An egress BH RLC channel is determined.

This BAP Data PDU is transmitted to the selected egress BH RLC channel of the selected egress link.

Observation 1: The decision result of the header rewriting does not depend on the reception operation but affects the transmission operation.

In this sense, the judgment on the header rewriting is preferably modeled by the Tx operation. Whether to take in the BAP header rewrite operation or to provide a new section needs to be further studied.

Proposal 1: For the inter-CU routing, RAN2 should agree to model the header rewriting determination by the transmission operation.

"Items that need to be further studied regarding downstream traffic For the details of how to judge the need for header rewriting, another further item to be studied is introduced regarding downstream traffic, i.e., "consider BAP data packets for BAP header rewriting for the receiver of the BAP entity in the IAB-MT of the boundary IAB node, when the ingress link is an SCG".

Noted that further study is needed for whether the SCG is sufficient to specify the ingress link for inter-topology migration/topology redundancy/RLF recovery, including consideration for the case where the SN is an F1 termination node.

As described above, the SCG may not be applicable to all cases such as the CP/UP separation, for example. Therefore, it is considered a simple matter for the donor side to explicitly indicate which ingress link, i.e., MCG or SCG, requires a header rewriting operation.

Proposal 2: For the inter-CU routing, RAN2 should agree that the donor side configures for the IAB-MT which ingress link, i.e., the MCG or SCG, requires BAP header rewriting.

### Header Rewriting Operation

Items that need to be further studied regarding header rewriting configuration RAN2 #116e discussed configuration issues and reached the following agreements with items that need to be further studied.

The details need to be further studied regarding rewriting the mapping configuration from the old routing ID to the new routing ID and limiting the possible rewriting (when all are to be rewritten).

The following further item to be studied is introduced in the currently running CR.

Based on the R3 agreement, a further study is made as to whether and how the header rewriting configurations differ between UL and DL. For UL traffic, they need to indicate the egress topology to refer. The indication may be implicit.

The currently running CR describes "when the BAP data PDU is targeted for BAP header rewriting, the transmitter of the BAP entity performs the BAP header rewriting operation", in other words, the header rewriting is performed in the Tx part after the header rewriting is determined. This case means only that the header rewriting configuration for downstream is always used in the IAB-DU, and the header rewriting configuration for upstream is used in the IAB-MT. Therefore, a simpler way is to define two header rewriting tables and associate the respective tables with the IAB-DU and the IAB-MT, which is the same as or similar to the decision operation of the header rewriting.

Proposal 3: For the inter-CU routing, it should be agreed that the donor side configures the boundary IAB node for each of two header rewriting tables used for the Tx part of the BAP entity in the IAB-DU (i.e., downstream) and the IAB-MT (i.e., upstream).

Items that need to be further studied regarding header rewriting operation
In the currently running CR, the header rewriting operation is taken in at the same level as the transmission operation and the reception operation, and the following description is given.

It is used to take the method of BAP header rewriting and can be used in the case of inter-CU routing, inter-CU re-routing, and inter-donor DU re-routing. The needs/locations/details in this section will be confirmed/revised after RAN2 has clear agreement for all cases of header rewriting.

The header rewriting operation is referred to in the transmission operation, and thus, needs to be taken in under the transmission operation.

Proposal 4: RAN2 should agree to define the header rewrite operation under the transmission operation, i.e., in the BAP specifications.

### Selection of Routing Table

In principle, the donor CU manages the routing table of the topology of the donor CU itself. In the inter-CU scenario, it is assumed that two donor CUs are involved in routing at the boundary IAB node and that these donor CUs manage routing tables independently. In this sense, it is a simple matter for the boundary IAB node to be configured with two routing tables managed separately by these donor CUs.

Proposal 5: RAN2 should agree that the boundary IAB node is configured with two respective routing tables managed by the donor CU and another donor CU.

When proposal 5 is agreed upon, it is worth discussing how the boundary IAB node selects the routing table to apply to the traffic being routed. In the inter-CU scenario, as illustrated in FIG. 2, there are two traffic categories, a traffic that is routed within a topology (in a manner the same as or similar to legacy routing, also known as non-concatenated traffic) and a traffic that is routed across two topologies (also known as concatenated traffic).

Considering the routing in the Tx part of the BAP entity, there are three transmission directions (egress links) regardless of the receiving source (ingress link) as illustrated in FIG. 24.

For a topology #1 in FIG. 24, it can be seen that a downstream traffic always follows the legacy routing table, regardless of whether the traffic is concatenated or not. Thus, the boundary IAB node needs to apply the legacy routing table to routing of the downstream traffic.

Proposal 6: For downstream packets, RAN2 should agree that the boundary IAB node always selects the legacy routing table.

For upstream traffic, the applicable routing table is different depending on which topology the packet is transmitted in. Assuming that the concatenated traffic has had the header rewritten prior to the routing processing, as in the currently running CR, the boundary IAB node can select the appropriate routing table as follows.

The legacy routing table (in the case of the topology #1 in FIG. 24) is selected for a packet having a header not rewritten.

A new routing table (in the case of a topology #2 in FIG. 24) is selected for a packet having a header rewritten.

Once the appropriate routing table is selected, the packet is processed by an existing routing procedure.

Proposal 7: For upstream packets, RAN2 should agree that the boundary IAB node selects either the legacy routing table or the new routing table depending on whether the packet being routed has a header rewritten.

### Intra-CU Re-routing and Inter-Donor-DU Re-Routing

### Condition for re-routing operation by header rewriting

In the currently running CR, as conditions for re-routing by the header rewriting, the following items that need to be further studied are introduced.

"When the header rewriting table (for re-routing) is configured" needs to be corrected to "when the header rewriting table includes an entry in which the BAP address of the previous routing ID matches the Destination field and the BAP path ID of the previous routing ID matches the path field".

This problem relates to whether the header rewriting table for re-routing (= inter-CU re-routing, inter-donor DU re-routing) is separated from that for routing (= inter-CU routing). The routing header rewriting is performed before the routing procedure, and the re-routing header rewriting is performed after the routing procedure. In other words, the routing header rewriting needs to be performed based on the routing header rewriting table and the re-routing header rewriting needs to be performed based on the re-routing header rewriting table. This is because, assuming the same header rewriting table, the boundary IAB node may be confused depending on whether the old routing ID is rewritten before or after the routing procedure, i.e., whether the routing or re-routing header rewriting is performed. Therefore, the re-routing header rewriting table and the routing header rewriting table are desirably separated from each other.

Observation 2: The routing header rewriting operation is performed before the routing procedure based on the routing header rewriting configuration, and the re-routing header rewriting operation is performed after the routing procedure based on the re-routing header rewriting configuration.

There is also a problem as to whether the inter-CU re-routing and inter-donor DU re-routing header rewriting tables need to be separated from each other. Since the inter-CU re-routing and the inter-donor DU re-routing are both scenarios for re-routing, the same header rewriting table can be considered to be able to be used. In addition, for both the inter-CU re-routing and the inter-donor DU re-routing, only the upstream traffic is assumed to be targeted. Therefore, the re-routing header rewriting table does not need to be distinguished for upstream and for downstream.

However, some differences may be considered in terms of path-related configuration because the inter-CU re-routing at this time performs RRC restoration towards a different IAB donor, i.e., a different topology (i.e., a transient state), whereas the inter-donor DU re-routing changes the destination BAP address to a different IAB donor DU within the same topology (i.e., a static state). Therefore, this item needs further study until further agreement has been reached.

From the above observations, the re-routing header rewriting table is desirably defined separately from at least the routing header rewriting table.

Proposal 8: RAN2 should agree that the inter-CU re-routing and inter-donor-DU header rewriting tables are different from the inter-CU routing table. Whether a common header rewriting table is applied to both re-routing scenarios needs to be further studied.

Header rewriting before and after egress link selection
The following further items that need to be studied are introduced in the currently running CR.

When RAN2 agrees to perform header rewriting after the egress link selection for UL re-routing based on header rewriting, the above can be modified.

It is assumed that the selection of the egress link is performed during the routing procedure and the header rewriting operation is performed before the routing procedure, i.e., the selection of the egress link and the header rewriting operation are currently separated. Therefore, when these processing operations are mixed, the process becomes complicated.

In RAN2 #116e, in the topology (inter-donor-DU re-routing), the precondition for BAP header rewriting for re-routing is agreed as follows, as in Rel-16, in other words, there is no condition with the selection of the egress link.

### In Topology

For upstream, the precondition/criterion for "re-routing by BAP header rewriting" is that no available next hop is found (due to BH RLF, congestion, Type-2 Indication, etc.) based on the BAP routing ID and based on the BAP address in the routing table, as in R16.

For header rewriting in the inter-CU re-routing, it is not reasonable to consider a different precondition. Therefore, the above agreement should be applied to both the inter-donor-DU re-routing and the inter-CU re-routing.

Proposal 9: RAN2 should agree that the egress link selection is performed in the routing procedure as in Rel-16, i.e., the header rewriting is performed before the egress link selection.

The advantage of the egress link selection before the header rewriting is to avoid the case of failing in re-routing the packet after the header rewriting. In other words, when the inter-CU re-routing or the inter-donor DU re-routing fails, it is unknown whether the header rewriting is performed on the packet on which the header rewriting has been performed, in other words, how many times the header rewriting is performed on one packet. When the header rewriting is performed a plurality of times, a risk of erroneous operation or complexity may possibly occur.

In this scenario, i.e., when the inter-CU or inter-donor-DU re-routing fails, it is assumed in response to reception of flow control feedback that the IAB node does not have an available link due to congestion. In this case, the packet is to be transmitted via the egress link that has previously recovered from congestion. Thus, it is desirable for the packet to have either the old routing ID or the new routing ID depending on the recovered egress link.

From the above discussion, a method is conceivable of restoring the header from the new routing ID to the old routing ID when the header rewriting based re-routing fails. In this way, the packet is restored to its original state, i.e., a state of having the old routing ID in the header, and can be processed from the beginning of the transmission operation of the BAP entity. This means that the packet is routed again, and when the routing fails, the packet may be re-routed.

Proposal 10: RAN2 should discuss whether to restore the header when the header rewriting based re-routing (i.e., inter-CU re-routing or inter-donor-DU re-routing) fails.

### Modeling header rewriting based re-routing

In Rel-16, routing and re-routing are modeled within the routing processing. In other words, re-routing follows routing.

When the entry in which the BAP address matches the Destination field, the BAP path ID matches the path field, and the egress link corresponding to the next hop address is available is present in the BH routing configuration, the egress link corresponding to the next hop address in the entry is selected.

When at least one entry in which the BAP address matches the Destination field and the egress link corresponding to the next hop address is available is present in the BH routing configuration,
the entry in which the BAP address is the same as the Destination field and the egress link corresponding to the next hop address is available is selected from the BH routing configuration.

The egress link corresponding to the next hop address in the entry selected above is selected.

In currently running CR, the header rewriting based re-routing according to the same modeling, i.e., Rel-16 re-routing, is applied.

Otherwise, when the header rewriting configuration (for re-routing) is configured and at least one egress link is available,
the BAP header rewriting operation is performed.

When in the BH routing configuration, the BAP address matches the Destination field, the BAP path ID matches the path field, and the egress link corresponding to the next hop address is present, the egress link corresponding to the next hop address in the entry is selected.

As described above, Rel-16 routing and Rel-17 header rewriting based re-routing appear to repeat the same sentence, i.e., the routing procedure. Therefore, it may be considered as a candidate for simplification.

Local re-routing in Rel-16 is not clear because re-routing is performed in the routing procedure. Thus, it may be a possible option to separate the re-routing section from the routing.

Proposition 11: RAN2 should discuss how to simplify the re-routing modeling in order to make specifications clearer.

### Summary of Enhancement of Functions

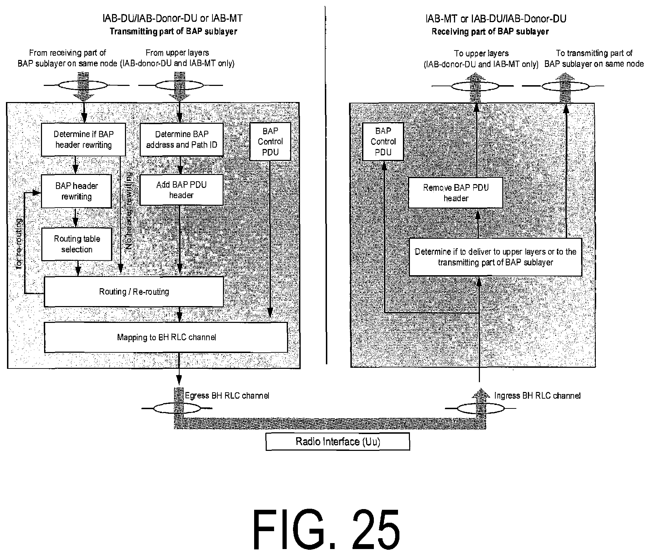

When the above proposals can be agreed upon, an example of an integrated solution for all scenarios is illustrated in FIG. 25 and a summary of the header rewriting table and routing table is illustrated in Table 1.

**[Table 1]**

| | Inter-CU routing | Inter-CU re-routing and inter-donor-DU re-routing |
|---|---|---|
| Targeted packet | upstream and downstream | only upstream |
| Header rewriting table(s) | two tables: | one or two tables: |
| * total of three or four tables | - for Tx part of BAP of IAB-DU (DL) | - further study is needed for common re-routing (UL) |
| | - for Tx part of BAP of IAB-MT (UL) | |
| Routing tables | two tables: (common for routing and re-routing) | |
| * total of two tables | - legacy table, i.e., same as Re1-16 (DL/UL) | |
| | - new table for different topology (UL toward different topology) | |

Overview of Configuration Enhancements for All Scenarios

## Claims

1. A communication control method used in a cellular communication system (1), the communication control method comprising:
receiving, by a boundary relay node (300-B), designation information related to an ingress link from a network;
identifying, by the boundary relay node (300-B), a topology corresponding to the ingress link, based on the designation information; and
performing, by the boundary relay node (300-B), header rewriting processing on a packet flown in from the ingress link, based on header rewriting configuration information received from the network, in response to the topology corresponding to the ingress link being a predetermined topology, wherein
the boundary relay node (300-B) is connected to a first donor node through an F1 connection and is connected to a second donor node through an RRC connection, the first donor node being configured to manage a first topology and the second donor node being configured to manage a second topology,
the predetermined topology is the second topology, and
the designation information is included in an RRC message, and the header rewriting configuration information is included in a F1AP message.

2. A boundary relay node (300-B) comprising:
a receiver circuitry configured to receive designation information related to an ingress link from a network; and
a processing circuitry configured to identify a topology corresponding to the ingress link, based on the designation information, wherein
the processing circuitry is configured to perform header rewriting processing on a packet flown in from the ingress link, based on header rewriting configuration information received from the network, in response to the topology corresponding to the ingress link being a predetermined topology,
the boundary relay node (300-B) is connected to a first donor node through an F1 connection and is connected to a second donor node through an RRC connection, the first donor node being configured to manage a first topology and the second donor node being configured to manage a second topology,
the predetermined topology is the second topology, and
the designation information is included in an RRC message, and the header rewriting configuration information is included in a F1AP message.

3. A cellular communication system (1) comprising:
a first donor node;
a second donor node, and
a boundary relay node (300-B), wherein
the boundary relay node (300-B) is configured to receive designation information related to an ingress link from a network;
the boundary relay node (300-B) is configured to identify a topology corresponding to the ingress link, based on the designation information; and
the boundary relay node (300-B) is configured to perform header rewriting processing on a packet flown in from the ingress link, based on header rewriting configuration information received from the network, in response to the topology corresponding to the ingress link being a predetermined topology, wherein
the boundary relay node (300-B) is connected to a first donor node through an F1 connection and is connected to a second donor node through an RRC connection, the first donor node being configured to manage a first topology and the second donor node being configured to manage a second topology,
the predetermined topology is the second topology, and
the designation information is included in an RRC message, and the header rewriting configuration information is included in a F1AP message.

4. A chipset for a boundary relay node (300-B), the chipset comprising means for carrying out the method of claim 1.

5. A computer program comprising instructions that, when the program is executed by a boundary relay node (300-B), cause the boundary relay node (300-B) to carry out the method of claim 1.

## Patentansprüche

1. Kommunikationssteuerverfahren, das in einem Zellularkommunikationssystem (1) verwendet wird, wobei das Kommunikationssteuerverfahren aufweist:
Empfangen, durch einen Grenzrelaisknoten (300-B), von Bestimmungsinformationen, die sich auf eine Eingangsverbindung beziehen, von einem Netzwerk,
Identifizieren, durch den Grenzrelaisknoten (300-B), einer zu der Eingangsverbindung korrespondierenden Topologie basierend auf den Bestimmungsinformationen, und
Durchführen, durch den Grenzrelaisknoten (300-B), einer Header-Umschreibungsverarbeitung an einem aus der Eingangsverbindung eingeleiteten Paket basierend auf von dem Netzwerk empfangenen Header-Umschreibungskonfigurationsinformationen als Reaktion darauf, dass die zu der Eingangsverbindung korrespondierende Topologie eine vorbestimmte Topologie ist, wobei
der Grenzrelaisknoten (300-B) über eine F1-Verbindung mit einem ersten Geberknoten verbunden ist und über eine RRC-Verbindung mit einem zweiten Geberknoten verbunden ist, wobei der erste Geberknoten konfiguriert ist, um eine erste Topologie zu verwalten, und der zweite Geberknoten konfiguriert ist, um eine zweite Topologie zu verwalten,
die vorbestimmte Topologie die zweite Topologie ist, und
die Bestimmungsinformationen in einer RRC-Nachricht enthalten sind und die Header-Umschreibungskonfigurationsinformationen in einer F1AP-Nachricht enthalten sind.

2. Grenzrelaisknoten (300-B), aufweisend:
eine Empfängerschaltung, die konfiguriert ist, um Bestimmungsinformationen in Bezug auf eine Eingangsverbindung von einem Netzwerk zu empfangen, und
eine Verarbeitungsschaltung, die konfiguriert ist, um basierend auf den Bestimmungsinformationen eine zu der Eingangsverbindung korrespondierende Topologie zu identifizieren, wobei
die Verarbeitungsschaltung konfiguriert ist, um basierend auf von dem Netzwerk empfangenen Header-Umschreibungskonfigurationsinformationen als Reaktion darauf, dass die zu der Eingangsverbindung korrespondierende Topologie eine vorbestimmte Topologie ist, eine Header-Umschreibungsverarbeitung an einem aus der Eingangsverbindung eingeleiteten Paket durchzuführen,
der Grenzrelaisknoten (300-B) über eine F1-Verbindung mit einem ersten Geberknoten verbunden ist und über eine RRC-Verbindung mit einem zweiten Geberknoten verbunden ist, wobei der erste Geberknoten konfiguriert ist, um eine erste Topologie zu verwalten, und der zweite Geberknoten konfiguriert ist, um eine zweite Topologie zu verwalten,
die vorbestimmte Topologie die zweite Topologie ist, und
die Bestimmungsinformationen in einer RRC-Nachricht enthalten sind und die Header-Umschreibungskonfigurationsinformationen in einer F1AP-Nachricht enthalten sind.

3. Zellulares Kommunikationssystem (1), aufweisend:
einen ersten Geberknoten,
einen zweiten Geberknoten und
einen Grenzrelaisknoten (300-B), wobei
der Grenzrelaisknoten (300-B) konfiguriert ist, um Bestimmungsinformationen in Bezug auf eine Eingangsverbindung von einem Netzwerk zu empfangen,
der Grenzrelaisknoten (300-B) konfiguriert ist, um auf der Grundlage der Bestimmungsinformationen eine zu der Eingangsverbindung korrespondierende Topologie zu identifizieren, und
der Grenzrelaisknoten (300-B) konfiguriert ist, um basierend auf von dem Netzwerk empfangenen Header-Umschreibungskonfigurationsinformationen eine Header-Umschreibungsverarbeitung an einem aus der Eingangsverbindung eingeleiteten Paket durchzuführen, als Reaktion darauf, dass die zu der Eingangsverbindung korrespondierende Topologie eine vorbestimmte Topologie ist, wobei
der Grenzrelaisknoten (300-B) über eine F1-Verbindung mit einem ersten Geberknoten verbunden ist und über eine RRC-Verbindung mit einem zweiten Geberknoten verbunden ist, wobei der erste Geberknoten konfiguriert ist, um eine erste Topologie zu verwalten, und der zweite Geberknoten konfiguriert ist, um eine zweite Topologie zu verwalten,
die vorbestimmte Topologie die zweite Topologie ist, und
die Bestimmungsinformationen in einer RRC-Nachricht enthalten sind und die Header-Umschreibungskonfigurationsinformationen in einer F1AP-Nachricht enthalten sind.

4. Chipsatz für einen Grenzrelaisknoten (300-B), wobei der Chipsatz Mittel zum Durchführen des Verfahrens gemäß Anspruch 1 aufweist.

5. Computerprogramm, aufweisend Befehle, die, wenn das Programm durch einen Grenzrelaisknoten (300-B) ausgeführt wird, bewirken, dass der Grenzrelaisknoten (300-B) das Verfahren gemäß Anspruch 1 durchführt.

## Revendications

1. Procédé de contrôle de communication utilisé dans un système de communication cellulaire (1), le procédé de contrôle de communication comprenant :
la réception, par un nœud relais limite (300-B), d'informations de désignation relatives à une liaison d'entrée provenant d'un réseau ;
l'identification, par le nœud relais limite (300-B), d'une topologie correspondant à la liaison d'entrée, sur la base des informations de désignation ; et
l'exécution, par le nœud relais limite (300-B), d'un traitement de réécriture d'en-tête sur un paquet acheminé depuis la liaison d'entrée, sur la base d'informations de configuration de réécriture d'en-tête reçues du réseau, en réponse au fait que la topologie correspondant à la liaison d'entrée est une topologie prédéterminée, dans lequel
le nœud relais limite (300-B) est connecté à un premier nœud donneur via une connexion F1 et est connecté à un deuxième nœud donneur via une connexion RRC, le premier nœud donneur étant configuré pour gérer une première topologie et le deuxième nœud donneur étant configuré pour gérer une deuxième topologie,
la topologie prédéterminée est la deuxième topologie, et
les informations de désignation sont incluses dans un message RRC, et les informations de configuration de réécriture d'en-tête sont incluses dans un message F1AP.

2. Nœud relais limite (300-B), comprenant :
un circuit récepteur configuré pour recevoir des informations de désignation relatives à une liaison d'entrée provenant d'un réseau ; et
un circuit de traitement configuré pour identifier une topologie correspondant à la liaison d'entrée, sur la base des informations de désignation, dans lequel
le circuit de traitement est configuré pour effectuer un traitement de réécriture d'en-tête sur un paquet acheminé depuis la liaison d'entrée, sur la base d'informations de configuration de réécriture d'en-tête reçues du réseau, en réponse au fait que la topologie correspondant à la liaison d'entrée est une topologie prédéterminée,
le nœud relais limite (300-B) est connecté à un premier nœud donneur via une connexion F1 et est connecté à un deuxième nœud donneur via une connexion RRC, le premier nœud donneur étant configuré pour gérer une première topologie et le deuxième nœud donneur étant configuré pour gérer une deuxième topologie,
la topologie prédéterminée est la deuxième topologie, et
les informations de désignation sont incluses dans un message RRC, et les informations de configuration de réécriture d'en-tête sont incluses dans un message F1AP.

3. Système de communication cellulaire (1), comprenant :
un premier nœud donneur ;
un deuxième nœud donneur, et
un nœud relais limite (300-B), dans lequel le nœud relais limite (300-B) est configuré pour recevoir des informations de désignation relatives à une liaison d'entrée provenant d'un réseau ;
le nœud relais limite (300-B) est configuré pour identifier une topologie correspondant à la liaison d'entrée, sur la base des informations de désignation ; et
le nœud relais limite (300-B) est configuré pour effectuer un traitement de réécriture d'en-tête sur un paquet acheminé depuis la liaison d'entrée, sur la base d'informations de configuration de réécriture d'en-tête reçues du réseau, en réponse au fait que la topologie correspondant à la liaison d'entrée est une topologie prédéterminée, dans lequel
le nœud relais limite (300-B) est connecté à un premier nœud donneur via une connexion F1 et est connecté à un deuxième nœud donneur via une connexion RRC, le premier nœud donneur étant configuré pour gérer une première topologie et le deuxième nœud donneur étant configuré pour gérer une deuxième topologie,
la topologie prédéterminée est la deuxième topologie, et
les informations de désignation sont incluses dans un message RRC, et les informations de configuration de réécriture d'en-tête sont incluses dans un message F1AP.

4. Jeu de puces pour un nœud relais limite (300-B), le jeu de puces comprenant des moyens pour mettre en œuvre le procédé selon la revendication 1.

5. Programme informatique comprenant des instructions qui, lorsque le programme est exécuté par un nœud relais limite (300-B), amènent le nœud relais limite (300-B) à mettre en œuvre le procédé selon la revendication 1.
